# EUROPÄISCHE PATENTSCHRIFT

(11) **EP 3 290 239 B1**
(45) Veröffentlichungstag und Bekanntmachung des Hinweises auf die Patenterteilung: **17.03.2021**
(21) Anmeldenummer: 17188363.0
(22) Anmeldetag: 29.08.2017
(51) Int. Cl.: B60D 1/32, B60D 1/06

(54) **SCHLINGERDÄMPFUNGSVORRICHTUNG FÜR FAHRZEUGANHÄNGER**
SWAY DAMPER FOR VEHICLE TRAILERS
DISPOSITIF D'AMORTISSEMENT D'OSCILLATION POUR REMORQUES DE VÉHICULE

(30) Priorität: 06.09.2016 DE 102016116641
(43) Veröffentlichungstag der Anmeldung: 07.03.2018
(73) Patentinhaber: ACPS Automotive GmbH, 71706 Markgröningen (DE)
(72) Erfinder: Rimmelspacher, Bernhard, 76287 Rheinstetten BW Baden-Württemberg (DE); Gentner, Wolfgang, 71711 Steinheim BW Baden-Württemberg (DE); Kadnikov, Aleksej, 71229 Leonberg BW Baden-Württemberg (DE)
(74) Vertreter: Hoeger, Stellrecht & Partner Patentanwälte mbB

(56) Entgegenhaltungen:
- EP-A1- 0 132 702
- DE-A1-102015 100 604
- US-A- 3 633 939

## Beschreibung

Die Erfindung betrifft eine Schlingerdämpfungsvorrichtung für Fahrzeuganhänger, die an eine einen Kugelhals und eine Kupplungskugel aufweisende Anhängekupplung anhängbar sind, umfassend eine anhängekupplungsseitige Vorrichtungsbasis, welche eine Montagevorrichtung mit einer Kugelhalsaufnahme umfasst, wobei die Kugelhalsaufnahme so ausgebildet ist, dass ein in dieser aufgenommener und fixierter Kugelhals in einer Längsmittelebene der anhängekupplungsseitigen Vorrichtungsbasis liegt und sich die anhängekupplungsseitige Vorrichtungsbasis quer zu der Längsmittelebene erstreckt und ausdehnt, beiderseits der Längsmittelebene der anhängekupplungsseitigen Vorrichtungsbasis gehaltene kupplungsfeste Gelenkeinheiten, welche beiderseits der Längsmittelebene angeordnete und sich entgegengesetzt zu einer Vorwärtsfahrtrichtung von der anhängekupplungsseitigen Vorrichtungsbasis weg erstreckende Dämpfereinheiten mit der anhängekupplungsseitigen Vorrichtungsbasis verbinden, die ihrerseits über eine anhängerseitige Vorrichtungsbasis mit einem Zugkupplungsträger des Fahrzeuganhängers verbunden ist, wobei die anhängekupplungsseitige Vorrichtungsbasis mit einer Montagevorrichtung versehen ist, die so ausgebildet ist, dass diese in einer Montagestellung in der Lage ist, den Kugelhals durch Zusammenwirken mit am Kugelhals symmetrisch zu einer Längsmittelebene desselben angeordneten Positionierkörpern desselben, die sich quer zu der Längsmittelebene des Kugelhalses von diesem weg erstrecken, derart formschlüssig zu fixieren, dass die Vorrichtungsbasis in Richtung quer zu der Mittelachse der Kupplungskugel und des Kugelansatzes unbeweglich am Kugelhals gehalten ist, wobei die Montagevorrichtung von der Montagestellung in eine Demontagestellung überführbar ist, in welcher die formschlüssige Fixierung der Montagevorrichtung an dem Kugelhals gelöst ist, und umgekehrt, und wobei die Haltekörper an der anhängekupplungsseitigen Vorrichtungsbasis gehalten sind. Derartige Schlingerdämpfungsvorrichtungen sind aus der EP 0 132 702 A1 bekannt, wobei bei derartigen Schlingerdämpfungsvorrichtungen das Problem besteht, diese zuverlässig und dauerhaft an dem Kugelhals festlegen zu können.

Der Erfindung liegt daher die Aufgabe zugrunde, eine Schlingerdämpfungsvorrichtung der gattungsgemäßen Art derart zu verbessern, dass die anhängekupplungsseitige Vorrichtungsbasis optimal mit dem Kugelhals verbunden werden kann.

Diese Aufgabe wird erfindungsgemäß dadurch gelöst, dass die Montagevorrichtung zwei Haltekörper umfasst, die mit ihren Halteaufnahmen an den Positionierkörpern formschlüssig angreifen, dass in die Halteaufnahmen bei an dem Kugelhals formschlüssig fixierter Montagevorrichtung die Positionierkörper des Kugelhalses eingreifen, dass die Halteaufnahmen die Positionierkörper derart umgreifen, dass die Halteaufnahmen an den Positionierkörpern gegen eine Bewegung in einer parallel zur Längsmittelebene der anhängekupplungsseitigen Vorrichtungsbasis verlaufenden Ebene gesichert sind, und dass die Haltekörper beim Übergang von der Montagestellung in die Demontagestellung relativ zueinander bewegbar sind oder umgekehrt.

Der Vorteil der erfindungsgemäßen Lösung ist darin zu sehen, dass durch die formschlüssige Fixierung der anhängekupplungsseitigen Vorrichtungsbasis eine stabile und dauerhafte Verbindung mit dem Kugelhals realisierbar ist.

Besonders günstig ist es, wenn die Montagevorrichtung so ausgebildet ist, dass diese in der Montagestellung in der Lage ist, den Kugelhals durch Zusammenwirken mit mindestens einem Positionierkörper desselben derart formschlüssig zu fixieren, dass die anhängekupplungsseitige Vorrichtungsbasis bezogen auf eine Mittelachse der Kupplungskugel und des Kugelansatzes drehfest mit dem Kugelhals verbunden ist.

Ferner ist vorzugsweise vorgesehen, dass die Montagevorrichtung so ausgebildet ist, dass diese in der Montagestellung in der Lage ist, den Kugelhals durch Zusammenwirken mit mindestens einem Positionierkörper desselben derart formschlüssig zu fixieren, dass die anhängekupplungsseitige Vorrichtungsbasis in Schwerkraftrichtung unbeweglich an dem Kugelhals gehalten ist.

Mit dieser Lösung ist sichergestellt, dass die anhängekupplungsseitige Vorrichtungsbasis optimal von dem Kugelhals abgestützt werden kann.

Eine weitere besonders günstige Vorrichtung sieht vor, dass die Montagevorrichtung so ausgebildet ist, dass diese in der Montagestellung in der Lage ist, den Kugelhals durch Zusammenwirken mit mindestens einem Positionierkörper desselben derart formschlüssig zu fixieren, dass die anhängekupplungsseitige Vorrichtungsbasis in Richtung parallel zur Mittelachse der Kupplungskugel und des Kugelansatzes unbeweglich am Kugelhals gehalten ist, so dass auch ein Abheben von entgegengesetzt zur Schwerkraftrichtung verhindert wird.

Ferner sieht eine günstige Lösung vor, dass die Montagevorrichtung so ausgebildet ist, dass diese in der Montagestellung in der Lage ist, den Kugelhals derart formschlüssig zu fixieren, dass eine Längsmittelebene der anhängekupplungsseitigen Vorrichtungsbasis mit einer Längsmittelebene des Kugelhalses zusammenfällt und somit der Kugelhals relativ zur Längsmittelebene der anhängekupplungsseitigen Vorrichtungsbasis zentriert von der Montagevorrichtung gehalten ist.

Die erfindungsgemäße Realisierung sieht vor, dass die Montagevorrichtung Halteaufnahmen aufweist, in welche bei an dem Kugelhals formschlüssig fixierter Montagevorrichtung Positionierkörper des Kugelhalses eingreifen. Das heißt, dass durch die Positionierkörper am Kugelhals und die Halteaufnahmen der Montagevorrichtung die formschlüssige Fixierung der Montagevorrichtung am Kugelhals erfolgt.

Insbesondere ist es dabei günstig, wenn durch das Eingreifen der Positionierkörper in die Halteaufnahmen die Montagevorrichtung mit der anhängekupplungsseitigen Vorrichtung um eine Mittelachse der Kupplungskugel und eines Kugelansatzes drehfest mit dem Kugelhals verbunden ist.

Durch diese formschlüssige Fixierung mittels der Positionierkörper und der Halteaufnahmen lässt sich somit insbesondere eine formschlüssige drehfeste Fixierung der Montagevorrichtung auf einfache Weise erreichen.

Hinsichtlich der Ausbildung der Halteaufnahmen wurden bislang keine weiteren Angaben gemacht.

So sieht eine vorteilhafte Lösung vor, dass die Halteaufnahmen Wandflächen aufweisen, die im Wesentlichen parallel zu einer Mittelachse der Kupplungskugel und des Kugelansatzes verlaufen und die jeweiligen Positionierkörper zwischen sich aufnehmen.

Unter einem im Wesentlichen parallelen Verlauf der Wandflächen ist dabei zu verstehen, dass die Wandflächen relativ zur Mittelachse der Kupplungskugel nicht exakt parallel ausgerichtet sein müssten, sondern von einer parallelen Ausrichtung um bis zu ± 30° abweichen können oder auch eine bis zu diesem Winkel gehende Abweichung in Form einer Krümmung aufweisen können.

Eine weitere vorteilhafte Lösung sieht vor, dass die Aufnahmen Wandflächen aufweisen, die quer zu einer Mittelachse der Kupplungskugel und des Kugelansatzes verlaufen und auf die jeweiligen Positionierkörper in Schwerkraftrichtung wirken.

Eine derartige Ausbildung der Wandflächen hat den Vorteil, dass eine Abstützung der anhängekupplungsseitigen Vorrichtungsbasis mittels derartiger Wandflächen an den jeweiligen Positionierkörpern möglich ist.

Die erfindungsgemäße Lösung sieht außerdem vor, dass die Aufnahmen an den Positionierkörpern derart angreifen, dass die Aufnahmen gegen eine Bewegung in einer quer zu einer Erstreckungsrichtung der Positionierkörper verlaufenden Ebene gesichert sind, so dass dadurch erreicht wird, dass die Aufnahmen durch die Positionierkörper gegen jede Bewegung in dieser Ebene formschlüssig fixiert sind und somit insgesamt eine umfassende formschlüssige Fixierung der Montagevorrichtung an den Positionierkörpern zur Folge haben.

Dabei greifen die Aufnahmen an den Positionierkörpern derart an, dass die Aufnahmen gegen eine Bewegung in einer parallel zur Längsmittelebene der anhängerkupplungsseitigen Vorrichtungsbasis verlaufenden Ebene gesichert sind.

Hinsichtlich der Anordnung der Positionierkörper am Kugelhals wurden bislang keine näheren Angaben gemacht.

So sieht eine vorteilhafte Lösung vor, dass die Positionierkörper am Kugelhals, insbesondere an einem Kugelhalsabschnitt desselben, symmetrisch zu einer Längsmittelebene desselben angeordnet sind.

Damit führt die Fixierung der Aufnahmen an den Positionierkörpern zu einer zuverlässigen und allseitigen Fixierung der anhängerkupplungsseitigen Vorrichtungsbasis am Kugelhals.

Ferner ist vorzugsweise vorgesehen, dass die Positionierkörper sich quer zu der Längsmittelebene des Kugelhalses von diesem weg erstrecken, so dass die Positionierkörper dabei insbesondere auf einander gegenüberliegenden Seiten des Kugelhalsabschnitts von dem Kugelhalsabschnitt abstehen. Zweckmäßigerweise ist bei der erfindungsgemäßen Lösung vorgesehen, dass die Positionierkörper an einem Kugelhalsabschnitt des Kugelhalses angeordnet sind, welcher an einen die Kupplungskugel tragenden Kugelansatz des Kugelhalses angrenzt und insbesondere sich ausgehend von dem Kugelansatz entlang des Kugelhalses über eine Distanz erstreckt, die maximal einem eineinhalb-fachen des Durchmessers der Kugelfläche der Kupplungskugel entspricht und dass insbesondere die Positionierkörper sich quer zu einem Verlauf des diese Positionierkörper tragenden Kugelhalsabschnitts und von diesem weg erstrecken.

Hinsichtlich der Ausbildung der Positionierkörper und deren Wirkung wurden ebenfalls im Zusammenhang mit den bisherigen Ausführungsbeispielen keine näheren Angaben gemacht.

Insbesondere ist es für die formschlüssige Fixierung von Vorteil, wenn jeder der Positionierkörper mindestens eine Positionierfläche trägt und wenn die mindestens eine Positionierfläche an einer Außenseite des jeweiligen Positionierkörpers angeordnet ist.

Ferner sieht eine vorteilhafte Lösung vor, dass die jeweilige Positionierfläche mindestens teilweise außerhalb einer Projektionskontur der Kupplungskugel liegt, welche durch Projektion der Kupplungskugel auf die Positionierkörper in Richtung parallel zur Mittelachse der Kupplungskugel und des Kugelansatzes entsteht, wobei insbesondere die Projektionskontur die Positionierkörper schneidet.

Ferner ist vorzugsweise vorgesehen, dass die Positionierkörper jeweils auf einander gegenüberliegenden Seiten angeordnete Positionierflächen aufweisen, so dass jeder Positionierkörper in der Lage ist, die jeweilige Halteaufnahme in mindestens zwei entgegengesetzten Richtungen definiert zu positionieren.

Eine vorteilhafte Lösung sieht ferner vor, dass an dem Kugelhalsabschnitt auf einander gegenüberliegenden Seiten der Längsmittelebene des Kugelhalses jeweils einer der Positionierkörper angeordnet ist und dass die Positionierkörper spiegelsymmetrisch zur Längsmittelebene des Kugelhalses ausgebildet sind.

Eine weitere vorteilhafte Lösung sieht vor, dass an dem Kugelhals mindestens eine weitere Positionierfläche angeordnet ist, welche quer zur ersten Positionierfläche verläuft.

Insbesondere ist dabei vorgesehen, dass die mindestens eine weitere Positionierfläche an dem Kugelhalsabschnitt des Kugelhalses angeordnet ist, welcher an einen die Kupplungskugel tragenden Kugelansatz des Kugelhalses angrenzt und insbesondere die Positionierkörper trägt.

Alternativ oder ergänzend hierzu sieht eine weitere Lösung vor, dass die mindestens eine weitere Positionierfläche an den Positionierkörpern angeordnet ist.

Dabei kann die weitere Positionierfläche in unterschiedlichster Art und Weise angeordnet sein.

Eine zweckmäßige Lösung sieht vor, dass die weitere Positionierfläche außerhalb einer Projektionskontur der Kupplungskugel liegt, welche durch Projektion der Kupplungskugel auf den diese tragenden Positionierkörper entsteht.

Eine andere Lösung sieht vor, dass die weitere Positionierfläche innerhalb einer Projektionskontur der Kupplungskugel liegt, welche durch Projektion der Kupplungskugel auf die Positionierkörper entsteht.

Im Zusammenhang mit der Montagevorrichtung wurde bislang lediglich deren Funktion in der Montagestellung definiert.

Außerdem ist erfindungsgemäß vorgesehen, dass die Montagevorrichtung von der Montagestellung in eine Demontagestellung überführbar ist, in welcher die formschlüssige Fixierung der Montagevorrichtung an dem Kugelhals gelöst ist, und umgekehrt.

Das heißt, dass zum Lösen der anhängekupplungsseitigen Vorrichtungsbasis oder montieren der anhängekupplungsseitigen Vorrichtungsbasis die Montagevorrichtung jeweils in ihre Demontagestellung überführbar ist und dann zum formschlüssigen Fixieren der Montagevorrichtung an dem Kugelhals die Montagevorrichtung von der jeweiligen Demontagestellung in die Montagestellung überführt wird.

Zur Ausführung der Montagevorrichtung ist vorgesehen, dass die Montagevorrichtung mit ihren Halteaufnahmen an den Positionierkörper formschlüssig angreifen.

Dabei sind insbesondere die Haltekörper an der anhängekupplungsseitigen Vorrichtungsbasis gehalten.

Zum Überführen der Haltekörper in die Demontagestellung wäre es beispielsweise denkbar, die Haltekörper von der anhängekupplungsseitigen Vorrichtungsbasis zu demontieren, um den Übergang von der Montagestellung in die Demontagestellung zu erreichen und beim Übergang von der Demontagestellung in die Montagestellung die Anhängekörper wiederum an der anhängerkupplungsseitigen Vorrichtungsbasis zu montieren.

Eine andere Lösung sieht vor, die Haltekörper so auszuführen, dass diese zumindest teilweise demontierbar sind, um von der Montagestellung wieder in die Demontagestellung überzugehen und umgekehrt.

Die erfindungsgemäße Lösung sieht jedoch vor, dass die Haltekörper beim Übergang von der Montagestellung in die Demontagestellung oder umgekehrt relativ zueinander bewegbar sind.

In diesem Zusammenhang wäre es beispielsweise denkbar, beide Haltekörper relativ zur anhängekupplungsseitigen Vorrichtungsbasis zu bewegen.

Ein vereinfachter Aufbau der Montagevorrichtung sieht vor, dass einer der Haltekörper relativ zu der anhängekupplungsseitigen Vorrichtungsbasis feststehend angeordnet ist und dass der andere der Haltekörper relativ zu der anhängekupplungsseitigen Vorrichtungsbasis bewegbar angeordnet ist.

Damit ist in einfacher Weise der Übergang von der Montagestellung in die Demontagestellung und umgekehrt durch Bewegen des einen der Haltekörper realisierbar.

Die Bewegung des bewegbaren Haltekörpers kann dabei die unterschiedlichsten Bewegungsformen annehmen.

Beispielsweise wäre es denkbar, den bewegbaren Haltekörper zu verschwenken.

Eine besonders einfache Lösung sieht jedoch vor, dass der bewegbare Haltekörper linear zwischen der Montagestellung und der Demontagestellung bewegbar ist.

Insbesondere lässt sich die Bewegbarkeit des bewegbaren Haltekörpers dadurch realisieren, dass der relativ zur anhängekupplungsseitigen Vorrichtungsbasis bewegbare Haltekörper in einer Führungsaufnahme einer Führungseinheit geführt ist.

Vorzugsweise ist die Führungseinheit so ausgebildet, dass die Führungsaufnahme den bewegbaren Haltekörper ganz oder abschnittsweise auf einer Außen- oder Umfangsseite umgreift, um diesen insbesondere in einer Führungsrichtung zu führen.

Um neben einer präzisen Führung des Haltekörpers auch ein Lösen der Montagevorrichtung in der Demontagestellung von den Positionierkörpern zu erleichtern, ist vorzugsweise die Führungsaufnahme mit einem Ausschnitt versehen, der sich von einem dem Kugelhalsabschnitt zugewandten Rand der Führungsaufnahme bis zu dem in der Demontagestellung stehenden Haltekörper erstreckt und in seinen Abmessungen der Form des Positionierkörpers angepasst ist, so dass dieser durch den Ausschnitt in der Führungsaufnahme hindurch bewegt werden kann.

Dabei könnte der in der Führungseinheit geführte Haltekörper in der Montagestellung durch ein separates Fixierelement festgelegt werden.

Eine hinsichtlich der Betätigung günstige Lösung sieht vor, dass der relativ zur anhängekupplungsseitigen Vorrichtungsbasis bewegbare Haltekörper mit einer Betätigungsvorrichtung zwischen der Montagestellung und der Demontagestellung bewegbar ist.

Hinsichtlich der Ausbildung der Gelenkeinheiten wurden bislang keine näheren Angaben gemacht.

So sieht eine vorteilhafte Lösung vor, dass die kupplungsfesten Gelenkeinheiten symmetrisch zur Längsmittelebene der anhängekupplungsseitigen Vorrichtungsbasis angeordnet sind.

Dabei können die Gelenkeinheiten unterschiedlich ausgebildet sein.

Eine einfache Lösung sieht vor, dass die Gelenkeinheiten einachsige Gelenke sind.

Eine andere vorteilhafte Lösung sieht vor, dass die Gelenkeinheiten mehrachsige Gelenke, insbesondere zweiachsige oder dreiachsige Gelenkeeinheiten, sind.

Hinsichtlich der Ausbildung der Dämpfereinheiten wurden im Zusammenhang mit der bisherigen Erläuterung der einzelnen Ausführungsbeispiele keine näheren Angaben gemacht.

So sieht eine vorteilhafte Lösung vor, dass die Dämpfereinheiten erste Längsdämpfungsglieder und zweite Längsdämpfungsglieder aufweisen, die relativ zueinander in einer Längsrichtung bewegungsgedämpft bewegbar sind.

Vorzugsweise ist dabei vorgesehen, dass die zweiten Längsdämpfungsglieder an den ersten Längsdämpfungsgliedern angreifen und gehemmt in Längsrichtung der ersten Längsdämpfungsglieder relativ zueinander verschiebbar sind.

Dies lässt sich beispielsweise dadurch realisieren, dass die zweiten Längsdämpfungsglieder mit Reibbelägen an den ersten Längsdämpfungsgliedern anliegen.

Hinsichtlich der Ausbildung der ersten Längsdämpfungsglieder wurden im Zusammenhang mit der bisherigen Erläuterung der einzelnen Ansprüche keine weiteren Angaben gemacht.

So sieht eine vorteilhafte Lösung vor, dass die ersten Längsdämpfungsglieder federelastisch biegbar und/oder tordierbar sind.

Eine derartige Lösung hat den Vorteil, dass dadurch die Gelenkeinheiten vereinfacht, insbesondere einachsig, ausgebildet werden können und die Bewegungen der anhängekupplungsseitigen Vorrichtungsbasis zumindest zum Teil durch Durchbiegung oder Torsion der ersten Längsdämpfungsglieder erfolgen kann.

Eine weitere vorteilhafte Lösung sieht vor, dass eines der Längsdämpfungsglieder in das jeweils andere der Längsdämpfungsglieder eingreifend angeordnet ist und die beiden Längsdämpfungsglieder in Richtung ihrer Längsrichtung gehemmt relativ zueinander bewegbar sind.

Dabei könnte bei dieser Lösung ebenfalls eines der Längsdämpfungsglieder, beispielsweise das Längsdämpfungsglied, in welches das andere der Längsdämpfungsglieder eingreift, mit Reibbelägen versehen sein.

Besonders günstig ist ferner, wenn die ersten Längsdämpfungsglieder in die zweiten Längsdämpfungsglieder eindringend angeordnet sind.

In diesem Fall ist beispielsweise eine Art Teleskopanordnung der ersten und zweiten Längsdämpfungsglieder relativ zueinander denkbar.

Im Fall einer Teleskopanordnung ist es vorzugsweise ebenfalls möglich, dass die zweiten Längsdämpfungsglieder die Bewegung der ersten Längsdämpfungsglieder relativ zu diesen pneumatisch und/oder hydraulisch hemmen.

Damit können die ersten und zweiten Längsdämpfungsglieder beispielsweise Elemente einer stoß- oder schwingungsdämpfenden Anordnung sein, die pneumatisch und/oder hydraulisch arbeitet.

Um die zweiten Längsdämpfungsglieder anhängerseitig abzustützen, ist vorzugsweise vorgesehen, dass die zweiten Längsdämpfungsglieder mit der anhängekupplungsseitigen Vorrichtungsbasis verbunden sind.

Die zweiten Längsdämpfungsglieder könnten dabei starr mit der anhängekupplungsseitigen Vorrichtungsbasis verbunden sein.

Eine besonders vorteilhafte Lösung sieht jedoch vor, dass die Dämpfungseinheiten, insbesondere die zweiten Längsdämpfungsglieder derselben, über Gelenkeinheiten mit der anhängekupplungsseitigen Vorrichtungsbasis verbunden sind.

In diesem Fall ist beispielsweise zweckmäßigerweise vorgesehen, dass die Dämpfungseinheiten über einachsige oder mehrachsige Gelenkeinheiten mit der anhängekupplungsseitigen Vorrichtungsbasis verbunden sind und somit relativ zum Anhänger abgestützt sind.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine Seitenansicht eines Heckbereichs einer Fahrzeugkarosserie mit einer Anhängekupplung und einen Deichselbereich des Anhängers mit einer Zugkugelkupplung und einem Zugkugelkupplungsträger, geführt an der Deichsel sowie ein erstes Ausführungsbeispiel einer erfindungsgemäßen Schlingerdämpfungsvorrichtung;
- Fig. 2: eine Draufsicht auf den Heckbereich der Fahrzeugkarosserie mit der Anhängekupplung und dem Deichselbereich mit der Zugkugelkupplung und dem Zugkugelkupplungsträger mitsamt dem ersten Ausführungsbeispiel der erfindungsgemäßen Schlingerdämpfungsvorrichtung;
- Fig. 3: eine perspektivische Darstellung des ersten Ausführungsbeispiels der erfindungsgemäßen Schlingerdämpfungsvorrichtung fixiert an einem Kugelhals der Anhängekupplung;
- Fig. 4: eine Draufsicht in Richtung des Pfeils A in Fig. 3;
- Fig. 5: eine Ansicht in Richtung des Pfeils B in Fig. 3;
- Fig. 6: eine perspektivische Ansicht von unten einer anhängekupplungsseitigen Vorrichtungsbasis mit einer Montagevorrichtung und einem von der Montagevorrichtung gehaltenen Teil des Kugelhalses der Anhängekupplung;
- Fig. 7: eine Draufsicht von unten entsprechend Fig. 6;
- Fig. 8: einen Schnitt längs Linie 8-8 in Fig. 7;
- Fig. 9: einen Schnitt längs Linie 9-9 in Fig. 8;
- Fig. 10: einen Schnitt längs Linie 10-10 in Fig. 8;
- Fig. 11: einen Schnitt ähnlich Fig. 9 in einer Demontagestellung der Haltekörper und
- Fig. 12: eine perspektivische Darstellung ähnlich Fig. 3 eines zweiten Ausführungsbeispiels einer erfindungsgemäßen Schlingerdämpfungsvorrichtung.

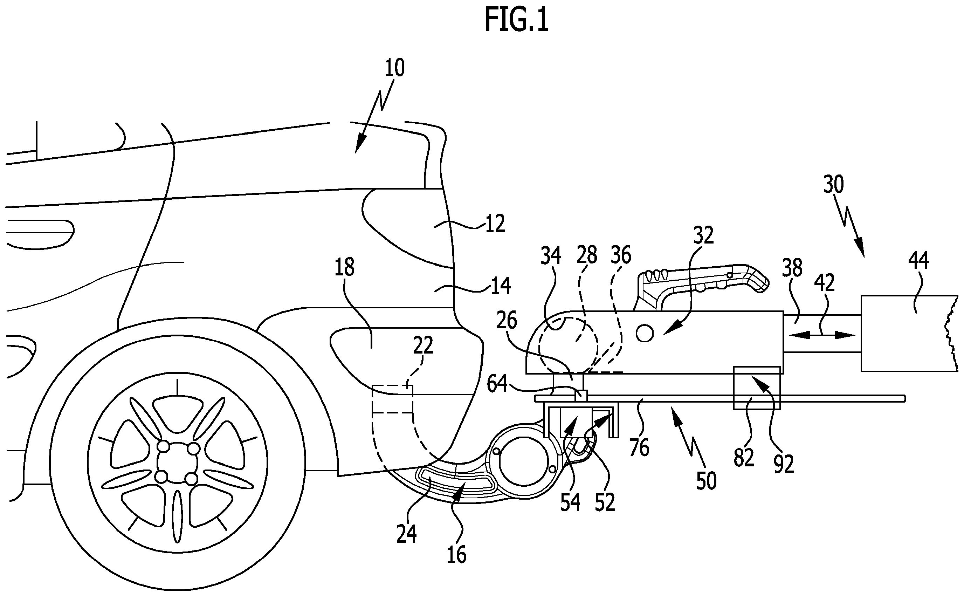

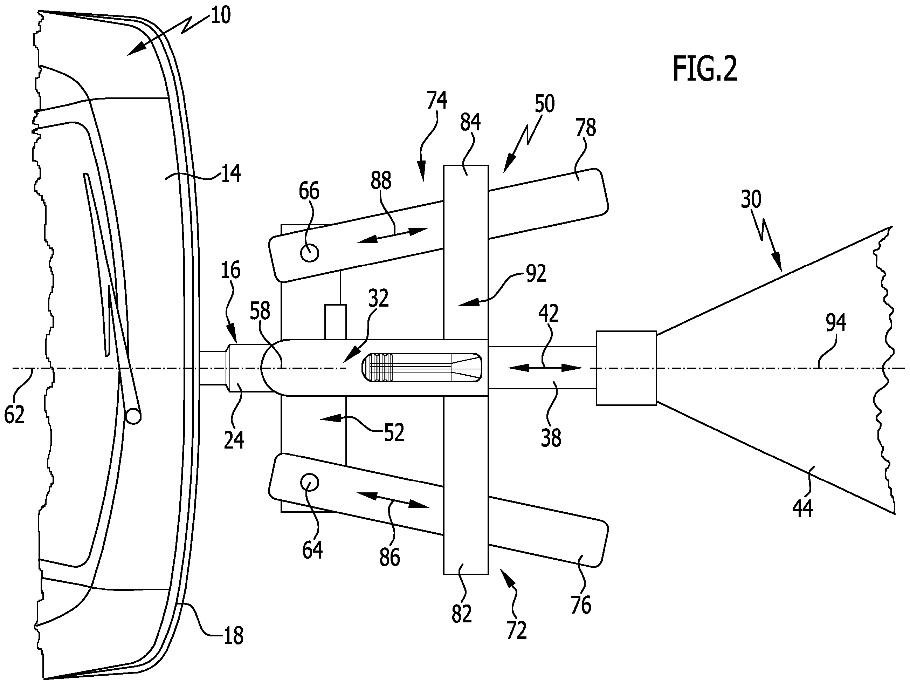

Fig. 1 und 2 zeigen ein als Ganzes mit 10 bezeichnetes Kraftfahrzeug, dessen Fahrzeugkarosserie 12 an einer Heckseite 14 mit einer als Ganzes mit 16 bezeichneten Anhängekupplung versehen ist, welche mittels einer von einer Stoßfängereinheit 18 verdeckten Trägereinheit 22 mit der Heckseite 14 der Fahrzeugkarosserie 12 verbunden ist und einen sich in einer Arbeitsstellung ausgehend von der Trägereinheit 22 unter der Stoßfängereinheit 18 hindurch und bis hinter die Stoßfängereinheit 18 erstreckenden Kugelhals 24 aufweist, der an einem der Trägereinheit 22 abgewandten Ende einen Kugelansatz 26 trägt, der in eine als Ganzes mit 28 bezeichnete und entgegengesetzt zu einer Vorwärtsfahrrichtung hinter der Stoßfängereinheit 18 angeordnete Kupplungskugel übergeht.

An der Kupplungskugel 28 angehängt ist ein als Ganzes mit 30 bezeichneter Anhänger, welcher zur Verbindung mit der Kupplungskugel 28 eine Zugkugelkupplung 32 aufweist, welche zur Verbindung mit der Kupplungskugel 28 diese mit einer Kupplungskugelaufnahme 34 übergreift und die Kupplungskugel 28 in der Kupplungskugelaufnahme 34 beispielsweise mit einem Halteelement 36 so fixiert, dass sich die Kupplungskugel 28 in der Kupplungskugelaufnahme 34 bewegen, jedoch nicht aus dieser heraus bewegen kann.

Die Zugkugelkupplung 32 ist ihrerseits an einem Zugkugelkupplungsträger 38 des Anhängers 30 gehalten, der sich in einer zur Vorwärtsfahrtrichtung des Anhängers 30 parallelen Längsrichtung 42 von einer Deichsel 44 des Anhängers 30 weg erstreckt und vorzugsweise relativ zu der Deichsel in der Längsrichtung 42 bewegbar ist, um beispielsweise eine Auflaufbremse des Anhängers 30 zu betätigen.

Zur Dämpfung von Schlingerbewegungen des Anhängers 30 relativ zu dem Kraftfahrzeug 10 ist eine als Ganzes mit 50 bezeichnete Schlingerdämpfungsvorrichtung vorgesehen.

Diese Schlingerdämpfungsvorrichtung umfasst, wie in den Fig. 1 bis 3 dargestellt, eine anhängekupplungsseitige Vorrichtungsbasis 52, die mittels einer nachfolgend noch im Detail zu beschreibenden Montagevorrichtung 54 mit dem Kugelhals 24 der Anhängekupplung 16 verbindbar ist und dadurch zumindest gegen eine Drehbewegung um eine Mittelachse 56 von Kupplungskugel 28 und Kugelansatz 26 drehfest mit dem Kugelhals 24 verbindbar ist. Vorzugsweise erfolgt mit der Montagevorrichtung 24 eine Montage der anhängekupplungsseitigen Vorrichtungsbasis 52 relativ zum Kugelhals 24 dergestalt, dass eine Längsmittelebene 58 der Vorrichtungsbasis 52 und der Montagevorrichtung 54 dann mit einer vertikalen Längsmittelebene 62 des Kugelhalses 24 und auch des Kraftfahrzeugs 10 zusammenfällt, wenn das Kraftfahrzeug 10 auf einer horizontalen Standfläche steht und dabei die Montagevorrichtung 54 die anhängekupplungsseitige Vorrichtungsbasis 52 an dem Kugelhals 24 der Anhängekupplung 16 fixiert, wie nachfolgend noch im Detail beschrieben.

In dieser am Kugelhals 24 der Anhängekupplung 16 montierten Stellung der anhängekupplungsseitigen Vorrichtungsbasis 52 erstreckt sich diese, wie in den Fig. 1 bis 3 dargestellt, quer zur Längsmittelebene 58 und somit auch quer zur vertikalen Längsmittelebene 62 des Kugelhalses 24 und trägt vorzugsweise symmetrisch zur Längsmittelebene 58 und somit auch zur vertikalen Längsmittelebene 62 kupplungsfeste Gelenkeinheiten 64, 66, welche die anhängekupplungsseitige Vorrichtungsbasis 52 mit Dämpfereinheiten 72, 74 verbinden.

Die Dämpfereinheiten 72 und 74 umfassen dabei, wie in Fig. 1 bis 3 dargestellt, mit den kupplungsfesten Gelenkeinheiten 64, 66 verbundene erste Längsdämpferelemente 76, 78, die relativ zu zweiten Längsdämpferelementen 82, 84 in Richtung ihrer Längsrichtungen 86, 88 gedämpft verschiebbar sind.

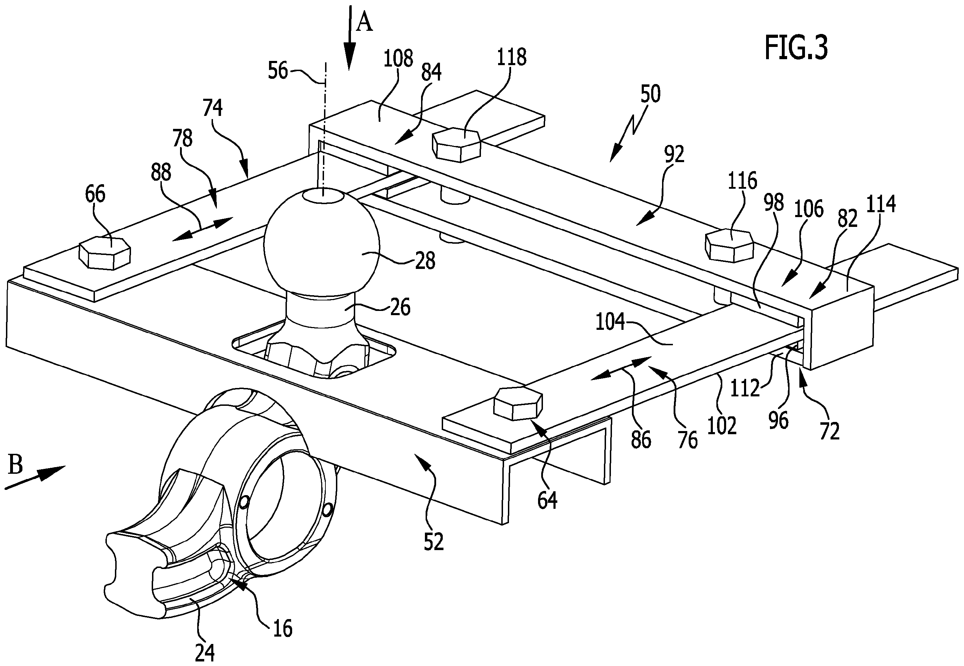

Dabei erstrecken sich, wie insbesondere aus Fig. 2 und 3 erkennbar, die Längsrichtungen 86, 88 quer zu der anhängekupplungsseitigen Vorrichtungsbasis 52 in Richtung des Anhängers 30.

Die zweiten Längsdämpferelemente 82, 84 sind vorzugsweise an einer anhängekupplungsseitigen Vorrichtungsbasis 92 angeordnet und von dieser gehalten sind, wobei die anhängekupplungsseitige Vorrichtungsbasis 92, wie insbesondere in Fig. 1 und 2 dargestellt, relativ zum Zugkugelkupplungsträger 38 feststehend angeordnet ist und dabei entweder mit dem Zugkugelkupplungsträger 38 verbunden sind oder mit der Zugkugelkupplung 32 verbunden ist.

In der in Fig. 2 dargestellten Geradeausfahrstellung des Kraftfahrzeugs 10 und des Anhängers 30 fällt eine vertikale Längsmittelebene 94 des Anhängers 30 und insbesondere auch der Deichsel 44 des Anhängers 30 mit der vertikalen Längsmittelebene 62 des Kraftfahrzeugs und der Anhängekupplung 16, insbesondere des Kugelhalses 24, und ebenfalls auch mit der Längsmittelebene 58 der Montagevorrichtung 54 zusammen.

Insbesondere ist die anhängekupplungsseitige Vorrichtungsbasis 92 so relativ zum Zugkugelkupplungsträger 38 und/oder zur Zugkugelkupplung 32 angeordnet und mit diesen fest verbunden, dass sich die anhängekupplungsseitige Vorrichtungsbasis 92 quer, insbesondere senkrecht, zur vertikalen Längsmittelebene 94 des Anhängers 30 erstreckt und in dem in Fig. 2 dargestellten Fall des Zusammenfallens der vertikalen Längsmittelebene 94 des Anhängers mit der vertikalen Längsmittelebene 62 des Kraftfahrzeugs und auch der Anhängekupplung 16 erstrecken sich die anhängerseitige Vorrichtungsbasis 92 und die anhängekupplungsseitige Vorrichtungsbasis 52 parallel zueinander und außerdem sind in dieser Stellung die Dämpfereinheiten 72 und 74 symmetrisch zu der Längsmittelebene 94 des Anhängers 30 und zur Längsmittelebene 62 des Kraftfahrzeugs 10 angeordnet.

Dies gilt jedoch nicht für den Fall einer Kurvenfahrt, da in diesem Fall die Längsmittelebene 94 des Anhängers 30 und die Längsmittelebene 62 des Kraftfahrzeugs 10 in einem Winkel relativ zueinander verlaufen und eine Schnittlinie der Längsmittelebenen 94 und 62 beispielsweise im Fall einer horizontalen Standfläche im Wesentlichen mit der Mittelachse 56 der Kupplungskugel 28 und des Kugelansatzes 26 zusammen fällt.

Hinsichtlich der Ausbildung der Dämpfereinheiten 72 und 74 wurden im Zusammenhang mit der bisherigen Beschreibung des ersten Ausführungsbeispiels der erfindungsgemäßen Schlingerdämpfungsvorrichtung 50 keine näheren Angaben gemacht.

Bei dem ersten Ausführungsbeispiel der erfindungsgemäßen Schlingerdämpfungsvorrichtung 50 sind die ersten Längsdämpfungselemente 76, 78 als Flachmaterial aus Federstahl ausgebildet und erstrecken sich ausgehend von den kupplungsfesten Gelenkeinheiten 64, 66 zu den zweiten Längsdämpfungselementen 82 und 84, die bei diesem Ausführungsbeispiel jeweils einander gegenüberliegende Reibbeläge 96, 98 umfassen, die auf einander gegenüberliegenden Flachseiten 102, 104 der ersten Längsdämpfungselemente 76, 78 mit Reibung aufliegen.

Die Reibbeläge 96, 98 werden dabei durch einen Reibbelagträger 106 gehalten, der beispielsweise ein unteres Trägerelement 112 und ein oberes Trägerelement 114 aufweist, die beide relativ zueinander fixiert sind und mit einer Vorspanneinheit 116 aufeinander zu bewegbar sind, um die Reibbeläge 96, 98 mit der notwendigen Vorspannkraft an den Flachseiten 102, 104 der ersten Längsdämpfungselemente 76, 78 anzulegen.

Im dargestellten ersten Ausführungsbeispiel sind die Trägerelemente 112 und 114 als Flachmaterialträger ausgebildet, die sich auch zwischen den beiden Reibbelagträgern 106 und 108 erstrecken und somit auch gleichzeitig die anhängekupplungsseitige Vorrichtungsbasis 92 bilden.

Dabei sind als Vorspanneinheiten 116, 118 beispielsweise Spannschrauben vorgesehen, die die beiden Trägerelemente 112 und 114 in Richtung aufeinander zu beaufschlagen und dadurch die Vorspannkraft erzeugen, mit welcher die Reibbeläge 96, 98 auf die Flachseiten 102, 104 der jeweiligen Längsdämpfungselemente 76, 78 einwirken.

Die ersten Längsdämpfungselemente 76, 78 haben eine derartige Länge, dass sie auch bei jeder möglichen Kurvenfahrt sich noch zwischen den Reibbelägen 96, 98 erstrecken und außerdem haben die ersten Längsdämpfungselemente 76, 78 aufgrund ihrer Ausbildung aus Federstahl die Möglichkeit der Durchbiegung und Torsion, so dass diese sich an alle zwischen dem Kraftfahrzeug 10 und dem Anhänger 30 auftretenden Fahrzustände anpassen können, insbesondere auch an Fahrzustände, bei welchen der Anhänger 30 eine andere Neigung als das Kraftfahrzeug 10 aufweist und somit eine Verdrehung des Kraftfahrzeugs 10 relativ zum Anhänger 30 um die jeweiligen Längsachsen erfolgt.

Durch das Einwirken der Reibbeläge 96, 98 der zweiten Längsdämpfungselemente 82, 84 auf die ersten Längsdämpfungselemente 76, 78 erfolgt bei den Dämpfereinheiten 72, 74 jeweils eine Hemmung und somit eine Dämpfung jeder Relativbewegung des Anhängers 30 relativ zum Kraftfahrzeug 10 und somit insbesondere ein Dämpfen von Schlingerbewegungen des Anhängers 30 relativ zum Kraftfahrzeug 10.

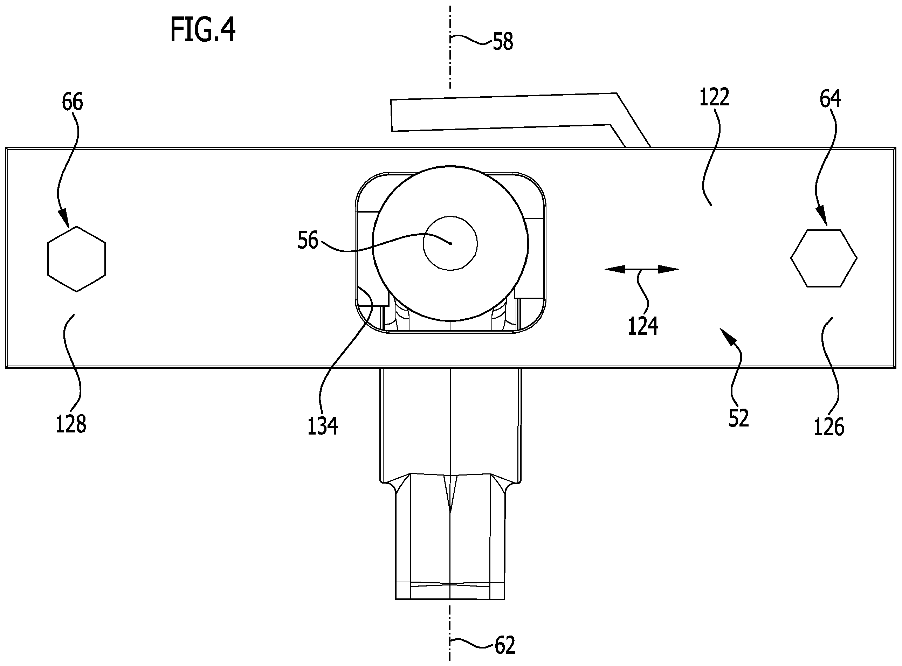

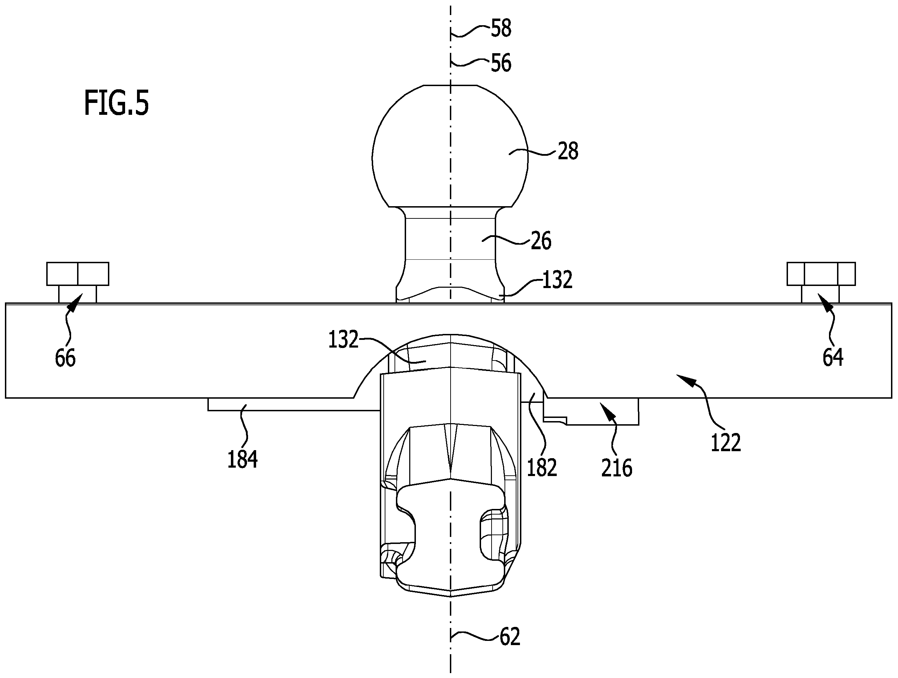

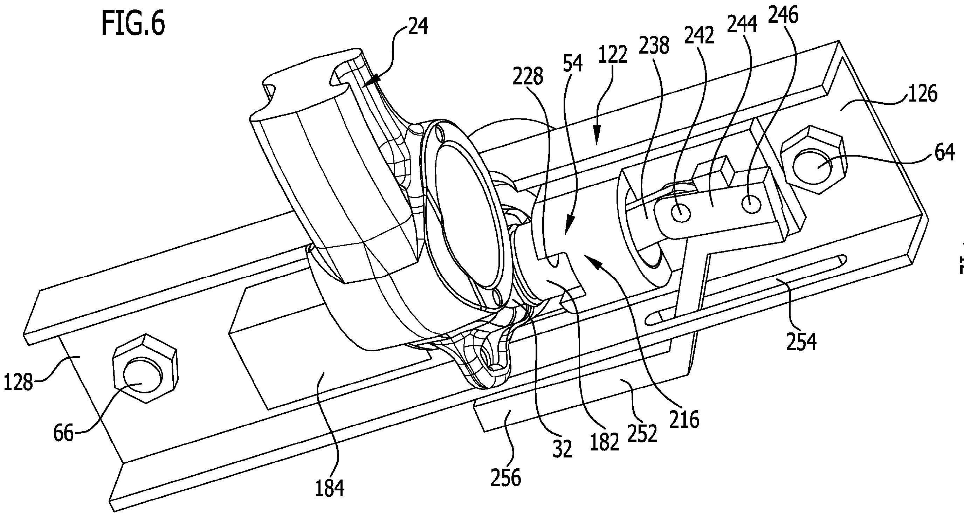

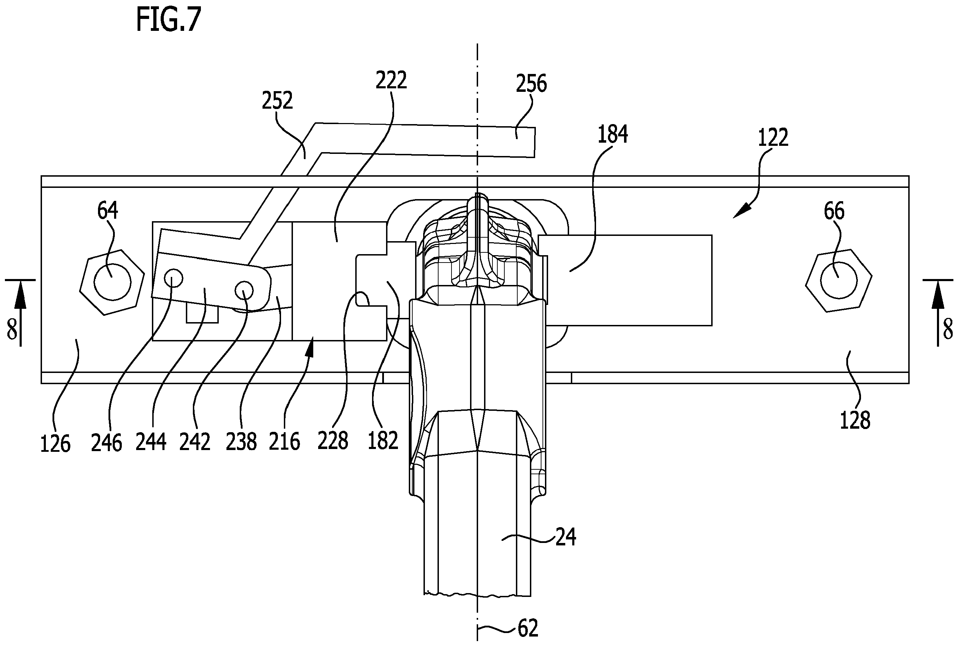

Bei dem ersten Ausführungsbeispiel ist, wie in den Fig. 4 bis 7 dargestellt, die anhängekupplungsseitige Vorrichtungsbasis 52 durch einen Profilträger 122, beispielsweise einen Profilträger 122 mit einem umgekehrt U-förmigen Profil, gebildet, welcher sich mit seiner Längsrichtung 124 quer, insbesondere senkrecht, zur Längsmittelebene 58 der anhängekupplungsseitigen Vorrichtungsbasis 52 erstreckt und dabei die kupplungsfesten Gelenkeinheiten 64, 66 jeweils an seinen Außenbereichen 126, 128 trägt.

Um die anhängekupplungsseitige Vorrichtungsbasis 52 unterhalb der Kupplungskugel 28 und des Kugelansatzes 26 in einem Kugelhalsabschnitt 132 positionieren zu können, der unterhalb des Kugelansatzes 26 und im Anschluss an diesen angeordnet ist, ist die anhängekupplungsseitige Vorrichtungsbasis 52 mit einem Durchbruch 134 versehen, welcher so dimensioniert ist, dass ein Teil des Kugelhalsabschnitts 132 sowie der Kugelansatz 26 und die Kupplungskugel 28 durch die anhängekupplungsseitige Vorrichtungsbasis 52 von einer Unterseite hindurch bewegbar sind und somit über die anhängekupplungsseitige Vorrichtungsbasis 52 überstehen.

Damit kann die beispielsweise an der Unterseite des Profilträgers 122 angeordnete Montagevorrichtung 54 im Bereich des Kugelhalsabschnitts 32 mit dem Kugelhals 24 zusammenwirken, um die anhängekupplungsseitige Vorrichtungsbasis 52 an dem Kugelhals 24 zu fixieren.

Der Kugelhals 24 ist vorzugsweise so ausgebildet, dass dieser sich mit dem die anhängekupplungsseitige Vorrichtungsbasis 52 tragenden Kugelhalsabschnitt 132 bis zu einem Übergangsabschnitt 142 erstreckt, an welchem der Kugelhals in den eine zur Mittelachse 56 von Kupplungskugel 28 und Kugelansatz 26 zylindrische Mantelfläche 144 aufweisenden Kugelansatz 26 übergeht und der Kugelansatz 26 geht dann seinerseits auf seiner dem Übergangsabschnitt 142 abgewandten Seite in die Kupplungskugel 26 mit ihrer Kugelfläche 146 über, wobei die Kugelfläche 146 beim Übergang zur zylindrischen Mantelfläche 144 des Kugelansatzes 26 unvollständig ist und ebenfalls im Bereich einer dem Kugelansatz 26 gegenüberliegenden Abflachung 148 der Kupplungskugel 28 unvollständig ist.

Vorzugsweise erstreckt sich der Kugelhalsabschnitt 132, mit welchem eine Verbindung zu der anhängekupplungsseitigen Vorrichtungsbasis 52 erfolgt, ausgehend von dem Übergangsabschnitt 142 längs der Mittelachse 56 über eine Distanz die maximal einem 1,5-fachen des Durchmessers der Kugelfläche 146 der Kupplungskugel 26 entspricht, vorzugsweise jedoch maximal über eine Distanz, die dem Durchmesser der Kugelfläche 146 entspricht.

Zum Zusammenwirken mit der Montagevorrichtung 54 trägt der Kugelhalsabschnitt 132 beiderseits der Längsmittelebene 62 Positionierkörper 152, 154, welche beispielsweise durch an den Kugelhalsabschnitt 132 angeformte und seitlich über den Kugelhalsabschnitt 132 überstehende Zapfen 156, 158 gebildet sind, die koaxial zu ihren Zapfenachsen 162, 164 verlaufende zylindrische Mantelflächen 166, 168 als Positionierflächen aufweisen, wobei die Zapfenachsen 162 und 164 vorzugsweise koaxial und senkrecht zur Längsmittelebene 62 verlaufen.

Insbesondere liegen die Mantelflächen 166, 168 zumindest teilweise radial zur Mittelachse 56 außerhalb einer Projektionskontur PK, die durch Projektion der Kupplungskugel 28 in Richtung parallel zur Mittelachse 56 auf die Positionierkörper 152, 154 entsteht.

Vorzugsweise sind die Positionierkörper 152, 154 einstückig an den Kugelhalsabschnitt 132 angeformt.

Es besteht aber auch die Möglichkeit, die Positionierkörper 152, 154 durch einen den Kugelhalsabschnitt 132 durchsetzenden und in diesem fixierten Bolzen auszubilden.

Insbesondere bilden die Positionierkörper 152, 154 beispielsweise als weitere Positionierflächen dienende Stirnflächen 172, 174, die senkrecht zu den Zapfenachsen 162, 164 verlaufen und vorzugsweise jeweils von der Längsmittelebene 62 denselben Abstand aufweisen, wobei die Stirnflächen 172, 174 radial zur Mittelachse 56 außerhalb der Projektionskontur PK liegen.

Besonders zweckmäßig ist es, wenn die Positionierkörper 152, 154 vollständig symmetrisch zu der Längsmittelebene 62 ausgebildet sind.

Ferner ist außerdem vorgesehen, dass auch der Kugelhalsabschnitt 132 selbst, der an den die Positionierkörper 152, 154 angeformt sind, vollständig symmetrisch zur Längsmittelebene 62 ausgebildet ist und beispielsweise noch um die Positionierkörper 152, 154 umlaufend angeordnete Ringflächen 176, 178, die ebenfalls als weitere Positionierflächen wirksam sein können, die in diesem Fall radial zur Mittelachse 56 innerhalb der Projektionskontur PK liegen.

Zum Fixieren der anhängerkupplungsseitigen Vorrichtungsbasis 52 an den Kugelhalsabschnitt 132 mit den Positionierkörpern 152, 154 ist die Montagevorrichtung 54 mit zwei Haltekörpern 182, 184 versehen, von denen jeder eine Halteaufnahme 186, 188 für den jeweiligen Positionierkörper 152, 154 umfasst, wobei die Halteaufnahmen 186, 188 so ausgebildet sind, dass diese an dem jeweiligen Positionierkörper 152, 154, insbesondere an dessen Mantelflächen 166, 168, zumindest mit ihren näherungsweise parallel zu der Mittelachse 58 verlaufenden Flächenbereichen 192, 194 beziehungsweise 196, 198 anliegen, um die anhängekupplungsseitige Vorrichtungsbasis 52 bezüglich der Mittelachse 56 drehfest an dem Kugelhalsabschnitt 132 festzulegen.

Ferner ist vorzugsweise vorgesehen, dass die Halteaufnahmen 186, 188 mit der Kupplungskugel 28 abgewandten Auflageflächen 202, 204 auf den Positionierkörpern 152, 154, insbesondere deren Mantelflächen 166, 168 aufliegen und somit die anhängekupplungsseitige Vorrichtungsbasis 52 in Schwerkraftrichtung an den Positionierkörpern 152, 154 abzustützen.

Eine besonders vorteilhafte Lösung sieht vor, dass die Halteaufnahmen 186, 188 die Positionierkörper 152, 154 derart umgreifen, dass keine Relativbewegung zwischen den Positionierkörpern 152 und 154 und den Haltekörpern 182, 184 in Richtung parallel zur Längsmittelebene 62 möglich ist.

Im einfachsten Fall umfassen die Halteaufnahmen 186, 188 zylindrische Innenflächen, die die zylindrisch zu den Zapfenachsen 162, 164 verlaufenden Positionierflächen darstellenden Mantelflächen 166, 168 umschließen und an diesen mit Spiel anliegen.

Um die Montagevorrichtung an dem Kugelhalsabschnitt 132 mit den Positionierkörpern 152, 154 montieren und demontieren zu können, ist vorzugsweise einer der Haltekörper 182, 184, beispielsweise der Haltekörper 184 fest mit der anhängekupplungsseitigen Vorrichtungsbasis 52, im dargestellten Ausführungsbeispiel fest mit dem Profilträger 122, verbunden.

Im Gegensatz dazu ist der andere der Haltekörper, in diesem Fall beispielsweise der Haltekörper 182, in einer Führungsaufnahme 212 in einer quer, vorzugsweise senkrecht zur vertikalen Längsmittelebene 62 verlaufenden Führungsrichtung 214 einer Führungseinheit 216 geführt, wobei die Führungseinheit 216 beispielsweise durch einen Führungskörper 222 gebildet ist, welche den Haltekörper 182 umschließt und mit einer sich in der Führungsrichtung 214 erstreckenden Ausnehmung 224, die den Haltekörper 182 umfangseitig aufnimmt, die Führungsaufnahme 212 bildet.

Insbesondere ist die die Führungsaufnahme 212 bildende Führungseinheit 216 so ausgebildet, dass diese den bewegbaren Haltekörper 182 ganz oder abschnittsweise mit dem Führungskörper 222 auf einer Außen- oder Umfangsseite umgreift um diesen insbesondere in einer Führungsrichtung 214 zu führen.

Um neben einer präzisen Führung des Haltekörpers 182 auch ein Lösen der Montagevorrichtung in der Demontagestellung von den Positionierkörpern 152, 154 zu erleichtern, ist vorzugsweise der Führungskörper 222 der Führungseinheit 216 mit einem Ausschnitt 228 versehen, der sich von einem dem Kugelhalsabschnitt 132 zugewandten Rand des Führungskörpers 222 bis zu dem in der Demontagestellung stehenden Haltekörper 182 erstreckt und in seinen Abmessungen der Form des Positionierkörpers 152 angepasst ist, so dass dieser durch den Ausschnitt 228 in dem Führungskörper 222 der Führungseinheit 216 hindurch aus der Führungsaufnahme 212 heraus bewegt werden kann.

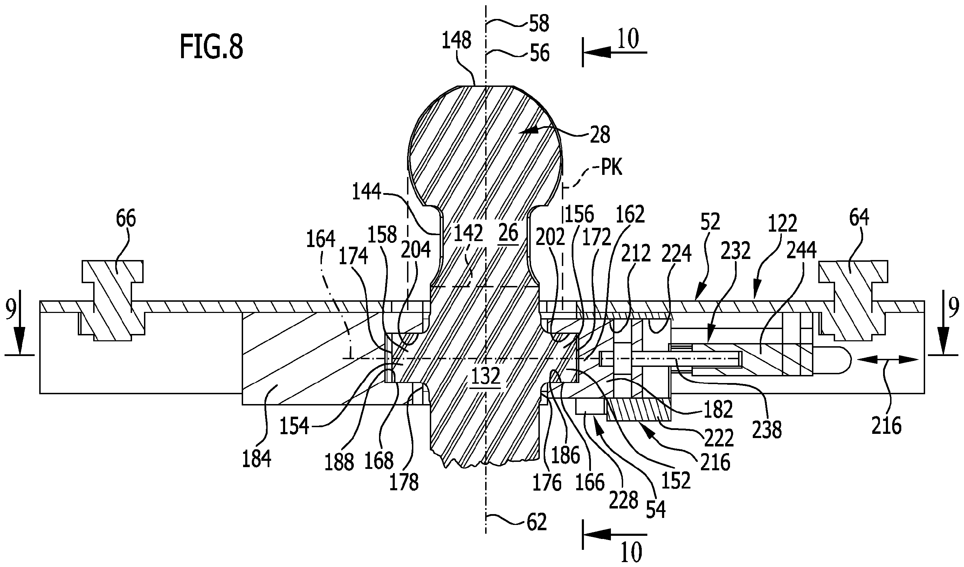

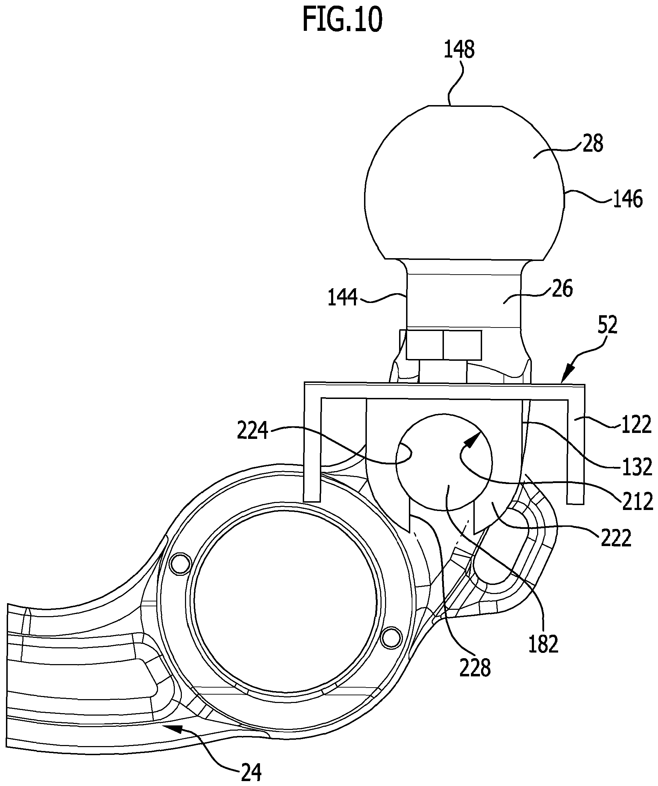

Dabei ist der Haltekörper 182 einerseits in Richtung des Kugelhalsabschnitts 132 soweit bewegbar, dass in der in Fig. 8, Fig. 9 und Fig. 10 dargestellten Montagestellung die Positionierkörper 152, 154 vollständig in die Halteaufnahmen 186, 188 der Haltekörper 182, 184 eingreifen und dadurch die beiden Haltekörper 182, 184 den Kugelhalsabschnitt 132 einerseits im Bereich der Positionierkörper 152, 154 fixieren. Andererseits beaufschlagen die Haltekörper 182 und 184 den Kugelhalsabschnitt 132 entweder im Bereich der als Positionierflächen dienenden Stirnflächen 172, 174 der Positionierkörper 152, 154 oder im Bereich der als Positionierflächen wirkenden Ringflächen 176, 178 am Kugelhalsabschnitt 132 derart in entgegengesetzten Richtungen quer zu seiner Längsmittelebene 62, dass die Längsmittelebene 62 des Kugelhalses 24 und somit auch des Kugelhalsabschnitts 132 mit der Längsmittelebene 58 der anhängekupplungsseitigen Vorrichtungsbasis 52 zusammenfällt und somit die anhängekupplungsseitige Vorrichtungsbasis 52 mit ihrer Längsmittelebene 58 so relativ zum Kugelhalsabschnitt 162 und somit zum Kugelhals 24 positioniert ist, dass die anhängekupplungsseitige Vorrichtungsbasis 52 symmetrisch zur Längsmittelebene 62 des Kugelhalses 24 an diesem montiert ist.

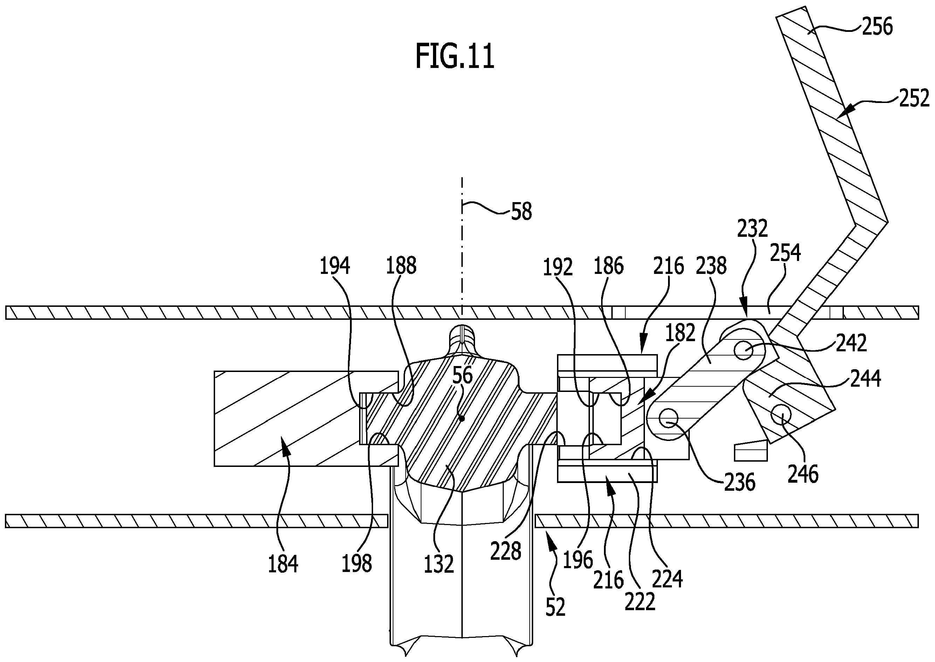

Zum Erreichen der Demontagestellung, dargestellt in Fig. 11 erfolgt ein Bewegen des Haltekörpers 182 in der Führungsrichtung 214 weg von dem Kugelhalsabschnitt 132, und zwar so weit, dass sowohl der Positionierkörper 152 als auch der Positionierkörper 154 außer Eingriff mit den jeweiligen Halteaufnahmen 186 beziehungsweise 188 kommen können und dadurch die anhängekupplungsseitige Vorrichtungsbasis 52 von dem Kugelhals 24 abgenommen werden kann, beispielsweise dadurch, dass die anhängekupplungsseitige Vorrichtungsbasis 52 in Richtung 124 so verschoben wird, dass der Positionierkörper 154 aus der Halteaufnahme 188 austritt, und dann so angehoben wird, dass der in die Führungsaufnahme 212 eingreifende Positionierkörper 152 die Führungsaufnahme 212 durch einen fahrbahnseitigen Ausschnitt 228 verlassen kann und der Kugelansatz 26 und die Kupplungskugel 28 durch den Durchbruch 134 im Profilträger 122 hindurchtauchen können.

Zur Bewegung des in der Führungsrichtung 214 bewegbaren Haltekörpers 182 sind die unterschiedlichsten Möglichkeiten einsetzbar.

Die einfachste Möglichkeit wäre, den bewegbaren Haltekörper 182 mit einem Keilkörper oder einer Schraube in der Führungsrichtung 214 zu verschieben.

Eine vorteilhafte, im Rahmen des ersten Ausführungsbeispiels dargestellte Lösung sieht eine Kniehebelbetätigung 232 vor, welche einen ersten Kniehebel 234 umfasst, der mittels eines ersten Gelenks 236 mit dem Haltekörper 182 verbunden ist und beispielsweise in eine Ausnehmung 238 des ersten Haltekörpers 182 eingreift.

Der erste Kniehebel ist ferner über ein Gelenk 242 mit einem zweiten Kniehebel 244 verbunden, welcher seinerseits mit einem dritten Gelenk 246 drehbar an der anhängekupplungsseitigen Vorrichtungsbasis 52, insbesondere am Profilträger 122, gelagert ist.

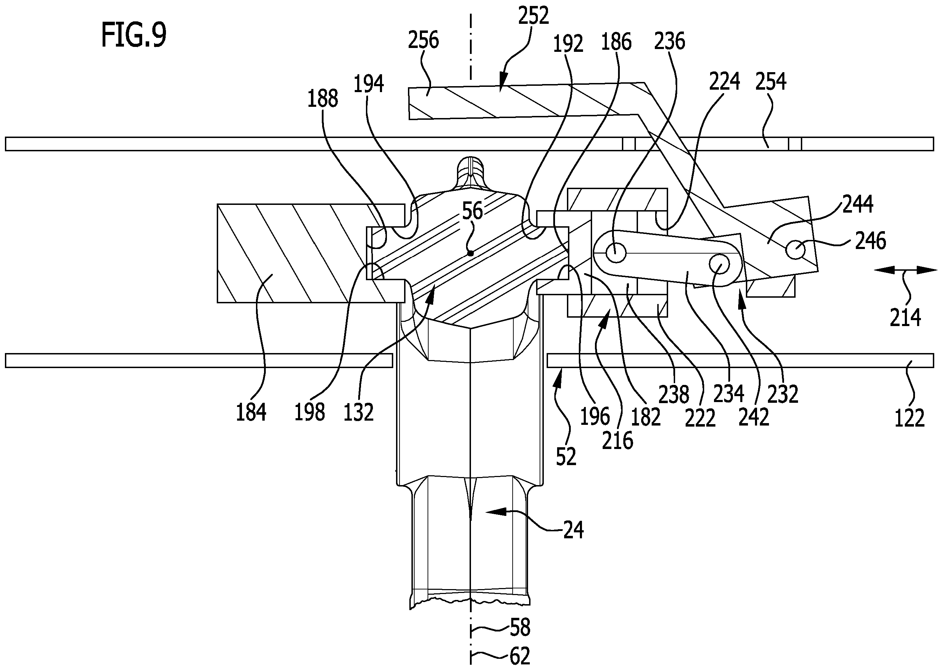

Dabei weisen die Gelenke 236, 242 und 246 alle parallel zueinander verlaufende Gelenkachsen auf, so dass der erste Kniehebel 234 und der zweite Kniehebel 244 relativ zueinander einerseits in eine gestreckte Stellung, dargestellt in Fig. 9, überführbar sind, in welcher die Hebelbetätigung 232 den Haltekörper 182 in der Montagestellung positioniert und von der gestreckten Stellung, dargestellt in Fig. 9, in eine abgewinkelte Stellung, dargestellt in Fig. 11 bringbar sind, in welcher der Haltekörper 182 von dem Kugelhalsabschnitt 132 so weit weg bewegbar ist, dass er in der Demontagestellung steht, in welcher der Kugelhalsabschnitt 132 mit den Positionierkörpern 152, 154 von der Montagevorrichtung 54 lösbar ist.

Zum Überführen der Kniehebel 234, 244 von der gestreckten Stellung in die abgewinkelte Stellung ist beispielsweise der zweite Kniehebel 244 mit einem Betätigungshebel 252 versehen, welcher durch einen Durchbruch 254 des Profilträgers 122 hindurchragt und einen Betätigungsabschnitt 256 aufweist, der sich in der gestreckten Stellung der Kniehebel 234, 244 ungefähr parallel zum Profilträger 122, und zwar im Abstand von diesem, auf einer Längsseite, insbesondere einer der anhängekupplungsseitigen Vorrichtungsbasis 52 zugewandten Längsseite, des Profilträgers 122 erstreckt.

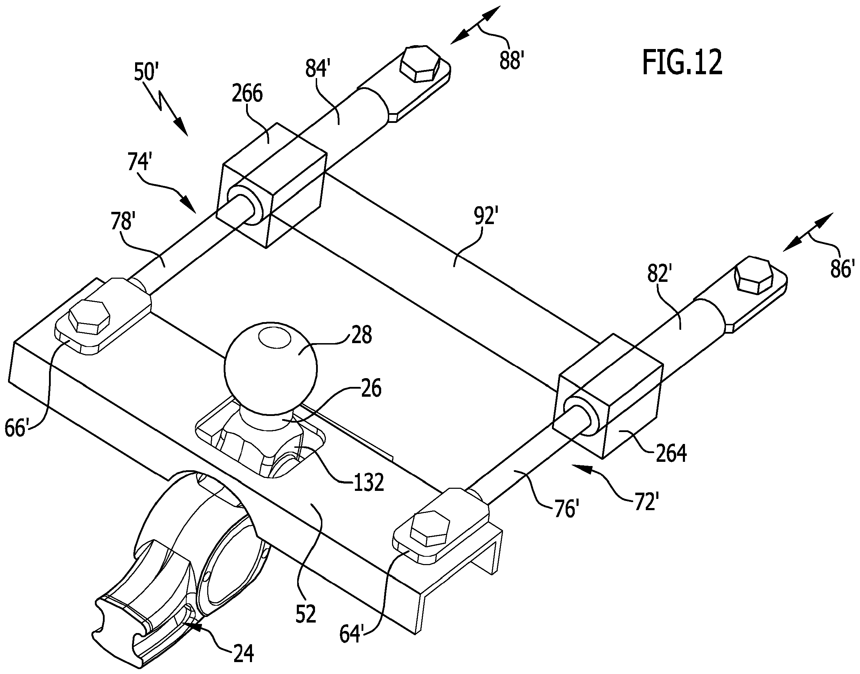

Bei einem zweiten Ausführungsbeispiel einer erfindungsgemäßen Schlingerdämpfungsvorrichtung 50', dargestellt in Fig. 12, ist die anhängekupplungsseitige Vorrichtungsbasis 52 beispielsweise in gleicher Weise ausgeführt, wie bei dem ersten Ausführungsbeispiel.

Im Gegensatz zum ersten Ausführungsbeispiel sind allerdings die kupplungsfesten Gelenkeinheiten 64' und 66' als Kugelgelenke ausgebildet und die Dämpfereinheiten 72' und 74' sind als pneumatische oder hydraulische Längsdämpfer, beispielsweise aufgebaut wie übliche Stoßdämpfer, ausgebildet, wobei die ersten Längsdämpferelemente 76', 78' beispielsweise die Betätigungsstangen der hydraulischen oder pneumatischen Dämpfereinheiten bilden und die zweiten Längsdämpferelemente 82' und 84' durch die Gehäuse der hydraulischen oder pneumatischen Dämpfereinheiten gebildet werden.

Vorzugsweise sind die zweiten Längsdämpferelemente ebenfalls über anhängerseitige Gelenkeinheiten 264 und 266 mit der anhängekupplungsseitigen Vorrichtungsbasis 92' gekoppelt.

Das Vorsehen von mehrdimensionalen Gelenkeinheiten 64' und 66' sowie 264 und 266 ist deshalb notwendig, da bei Ausbildung der Dämpfereinheiten 72' und 74' als pneumatische oder hydraulische Längsdämpfer diese in ihren Längsrichtungen 86' und 88' starr sind und sich somit nicht wie die ersten Längsdämpferelemente 76, 78 des ersten Ausführungsbeispiels durchbiegen können.

Aus diesem Grund ist es zum Ausgleich von Drehbewegungen des Kraftfahrzeugs 10 oder des Anhängers 30 um deren Längsachse erforderlich, eine Kippbewegung zwischen der anhängekupplungsseitigen Vorrichtungsbasis 52 und der anhängerseitigen Vorrichtungsbasis 92' kombiniert mit einer Drehbewegung zuzulassen.

## Patentansprüche

1. Schlingerdämpfungsvorrichtung (50) für Fahrzeuganhänger (30), die an eine einen Kugelhals (24) und eine Kupplungskugel (28) aufweisende Anhängekupplung (16) anhängbar sind, umfassend eine anhängekupplungsseitige Vorrichtungsbasis (52), welche eine Montagevorrichtung (54) mit einer Kugelhalsaufnahme (180) umfasst, wobei die Kugelhalsaufnahme (180) so ausgebildet ist, dass ein in dieser aufgenommener und fixierter Kugelhals (24) in einer Längsmittelebene (58) der anhängekupplungsseitigen Vorrichtungsbasis (52) liegt und sich die anhängekupplungsseitige Vorrichtungsbasis (52) quer zu der Längsmittelebene (58) erstreckt und ausdehnt, beiderseits der Längsmittelebene (58) an der anhängekupplungsseitigen Vorrichtungsbasis (52) gehaltene kupplungsfeste Gelenkeinheiten (64, 66), welche beiderseits der Längsmittelebene (58) angeordnete und sich entgegengesetzt zu einer Vorwärtsfahrtrichtung von der anhängekupplungsseitigen Vorrichtungsbasis (52) weg erstreckende Dämpfereinheiten (72, 74) mit der anhängekupplungsseitigen Vorrichtungsbasis (52) verbinden, die ihrerseits über eine anhängeseitige Vorrichtungsbasis (92) mit einem Zugkupplungsträger (38) des Fahrzeuganhängers (30) verbunden ist, wobei die anhängekupplungsseitige Vorrichtungsbasis (52) mit einer Montagevorrichtung (54) versehen ist, die so ausgebildet ist, dass diese in einer Montagestellung in der Lage ist, den Kugelhals (24) durch Zusammenwirken mit am Kugelhals (24) symmetrisch zu einer Längsmittelebene (62) desselben angeordneten Positionierkörpern (152, 154) desselben, die sich quer zu der Längsmittelebene (62) des Kugelhalses (24) von diesem weg erstrecken, derart formschlüssig zu fixieren, dass die Vorrichtungsbasis (52) in Richtung quer zu der Mittelachse (56) der Kupplungskugel (28) und des Kugelansatzes (26) unbeweglich am Kugelhals (24) gehalten ist, wobei die Montagevorrichtung (54) von der Montagestellung in eine Demontagestellung überführbar ist, in welcher die formschlüssige Fixierung der Montagevorrichtung (54) an dem Kugelhals (24) gelöst ist, und umgekehrt, und wobei die Montagevorrichtung zwei Haltekörper (182, 184) umfasst, wobei die zwei Haltekörper (182, 184) an der anhängekupplungsseitigen Vorrichtungsbasis (52) gehalten sind,
**dadurch gekennzeichnet, dass** die zwei Haltekörper (182, 184) mit ihren Halteaufnahmen (186, 188) an den Positionierkörpern (152, 154) formschlüssig angreifen, dass in die Halteaufnahmen (186, 188) bei an dem Kugelhals (24) formschlüssig fixierter Montagevorrichtung (54) die Positionierkörper (152, 154) des Kugelhalses (24) eingreifen, dass die Halteaufnahmen (186, 188) die Positionierkörper (152, 154) derart umgreifen, dass die Halteaufnahmen (186, 188) an den Positionierkörpern (152, 154) gegen eine Bewegung in einer parallel zur Längsmittelebene (58) der anhängekupplungsseitigen Vorrichtungsbasis (52) verlaufenden Ebene gesichert sind, und dass die Haltekörper (182, 184) beim Übergang von der Montagestellung in die Demontagestellung relativ zueinander bewegbar sind oder umgekehrt.

2. Schlingerdämpfungsvorrichtung nach Anspruch 1, **dadurch gekennzeichnet, dass** die Montagevorrichtung (54) so ausgebildet ist, dass diese in der Montagestellung in der Lage ist, den Kugelhals (24) durch Zusammenwirken mit mindestens einem Positionierkörper (152, 154) desselben derart formschlüssig zu fixieren, dass die anhängekupplungsseitige Vorrichtungsbasis (52) bezogen auf eine Mittelachse (56) der Kupplungskugel (28) und des Kugelansatzes (26) drehfest mit dem Kugelhals (24) verbunden ist, und/oder dass insbesondere die Montagevorrichtung (54) so ausgebildet ist, dass diese in der Montagestellung in der Lage ist, den Kugelhals (24) durch Zusammenwirken mit mindestens einem Positionierkörper (152, 154) desselben derart formschlüssig zu fixieren, dass die anhängekupplungsseitige Vorrichtungsbasis (52) in Schwerkraftrichtung unbeweglich am Kugelhals (24) gehalten ist, und/oder dass insbesondere die Montagevorrichtung (54) so ausgebildet ist, dass diese in der Montagestellung in der Lage ist, den Kugelhals (24) durch Zusammenwirken mit mindestens einem Positionierkörper (152, 154) desselben derart formschlüssig zu fixieren, dass die anhängekupplungsseitige Vorrichtungsbasis (52) in Richtung parallel zur Mittelachse (56) der Kupplungskugel (28) und des Kugelansatzes (26) unbeweglich am Kugelhals (24) gehalten ist, und/oder dass insbesondere die Montagevorrichtung (54) so ausgebildet ist, dass diese in der Montagestellung in der Lage ist, den Kugelhals (24) derart formschlüssig zu fixieren, dass eine Längsmittelebene (58) der anhängekupplungsseitigen Vorrichtungsbasis (52) mit einer Längsmittelebene (62) des Kugelhalses (24) zusammenfällt.

3. Schlingerdämpfungsvorrichtung nach einem der voranstehenden Ansprüche, **dadurch gekennzeichnet, dass** insbesondere durch das Eingreifen der Positionierkörper (152, 154) in die Halteaufnahmen (186, 188) die Montagevorrichtung (54) mit der anhängekupplungsseitigen Vorrichtungsbasis (52) um eine Mittelachse (56) der Kupplungskugel (28) und eines Kugelansatzes (26) drehfest mit dem Kugelhals (24) verbunden ist, und/oder dass insbesondere die Halteaufnahmen (186, 188) Wandflächen (192, 196, 194, 198) aufweisen, die im Wesentlichen parallel zu einer Mittelachse (56) der Kupplungskugel (28) und des Kugelansatzes (26) verlaufend und die jeweiligen Positionierkörper (152, 154) zwischen sich aufnehmen, und/oder dass insbesondere die Halteaufnahmen (186, 188) Wandflächen (202, 204) aufweisen, die quer zu der Mittelachse (56) der Kupplungskugel (28) und des Kugelansatzes (26) verlaufen und auf die jeweiligen Positionierkörper (152, 154) in Schwerkraftrichtung wirken, und/oder dass insbesondere die Halteaufnahmen (186, 188) an den Positionierkörpern (152, 154) derart angreifen, dass die Halteaufnahmen (186, 188) gegen eine Bewegung in einer quer zu einer Erstreckungsrichtung der Positionierkörper (152, 154) verlaufenden Ebene gesichert sind.

4. Schlingerdämpfungsvorrichtung nach Anspruch 3, **dadurch gekennzeichnet, dass** die Positionierkörper (152, 154) an einem Kugelhalsabschnitt (132) des Kugelhalses (24) angeordnet sind, welcher an einen die Kupplungskugel (28) tragenden Kugelansatz (26) des Kugelhalses (24) angrenzt und insbesondere sich ausgehend von dem Kugelansatz (26) entlang des Kugelhalses (24) über eine Distanz erstreckt, die maximal einem eineinhalbfachen des Durchmessers der Kugelfläche (146) der Kupplungskugel (28) entspricht, dass insbesondere die Positionierkörper (152, 154) sich quer zu einem Verlauf des diese Positionierkörper (152, 154) tragenden Kugelhalsabschnitts (132) und von diesem weg erstrecken.

5. Schlingerdämpfungsvorrichtung nach Anspruch 3 oder 4, **dadurch gekennzeichnet, dass** jeder der Positionierkörper (54) mindestens eine Positionierfläche (166, 168) trägt und dass die mindestens eine Positionierfläche (166, 168) an einer Außenseite des jeweiligen Positionierkörpers (152, 154) angeordnet ist, und dass insbesondere die jeweilige Positionierfläche (166, 168) mindestens teilweise radial zur Mittelachse (56) außerhalb einer Projektionskontur (PK) der Kupplungskugel (28) liegt, welche durch Projektion der Kupplungskugel (28) auf die Positionierkörper (152, 154) entsteht, wobei insbesondere die Projektionskontur (PK) die Positionierkörper (152, 154) schneidet, und dass insbesondere die Positionierkörper (152, 154) jeweils auf einander gegenüberliegenden Seiten angeordnete Positionierflächen (166, 168) aufweisen.

6. Schlingerdämpfungsvorrichtung nach Anspruch 4 oder 5, **dadurch gekennzeichnet, dass** an dem Kugelhalsabschnitt (132) auf einander gegenüberliegenden Seiten einer Längsmittelebene (62) des Kugelhalses (24) jeweils einer der Positionierkörper (152, 154) angeordnet ist, und dass die Positionierkörper (152, 154) spiegelsymmetrisch zur Längsmittelebene (62) des Kugelhalses (24) ausgebildet sind.

7. Schlingerdämpfungsvorrichtung nach einem der Ansprüche 4 bis 6, **dadurch gekennzeichnet, dass** an dem Kugelhals (24) mindestens eine weitere Positionierfläche (172, 174, 176, 178) angeordnet ist, welche quer zur ersten Positionierfläche (166, 168) verläuft.

8. Schlingerdämpfungsvorrichtung nach Anspruch 7, **dadurch gekennzeichnet, dass** die mindestens eine weitere Positionierfläche (176, 178) an dem Kugelhalsabschnitt (132) des Kugelhalses (24) angeordnet ist, welcher an einen die Kupplungskugel (28) tragenden Kugelansatz (26) des Kugelhalses (24) angrenzt und insbesondere die Positionierkörper (152, 154) trägt, und dass insbesondere die mindestens eine weitere Positionierfläche (176, 178) radial zur Mittelachse (56) innerhalb einer Projektionskontur (PK) der Kupplungskugel (28) liegt, welche durch Projektion der Kupplungskugel (28) auf die Positionierkörper (152, 154) entsteht, und/oder dass insbesondere die mindestens eine weitere Positionierfläche (172, 174) an den Positionierkörpern (152, 154) angeordnet ist und dass insbesondere die mindestens eine weitere Positionierfläche (172, 174) radial zur Mittelachse (56) außerhalb einer Projektionskontur (PK) der Kupplungskugel (28) liegt, welche durch Projektion der Kupplungskugel (28) auf den diese tragenden Positionierkörper (152, 154) entsteht.

9. Schlingerdämpfungsvorrichtung nach einem der voranstehenden Ansprüche, **dadurch gekennzeichnet, dass** einer der Haltekörper (184) relativ zu der anhängekupplungsseitigen Vorrichtungsbasis (52) feststehend angeordnet ist und dass der andere der Haltekörper (186) relativ zu der anhängekupplungsseitigen Vorrichtungsbasis (52) bewegbar angeordnet ist, dass insbesondere der relativ zur anhängekupplungsseitigen Vorrichtungsbasis (52) bewegbare Haltekörper (182) in einer Führungsaufnahme (212) einer Führungseinheit (216) geführt ist, dass insbesondere der relativ zur anhängekupplungsseitigen Vorrichtungsbasis (52) bewegbare Haltekörper (182) mit einer Betätigungsvorrichtung (232) zwischen der Montagestellung und der Demontagestellung bewegbar ist.

10. Schlingerdämpfungsvorrichtung nach einem der voranstehenden Ansprüche, **dadurch gekennzeichnet, dass** die kupplungsfesten Gelenkeinheiten (64, 66) symmetrisch zur Längsmittelebene (58) der anhängekupplungsseitigen Vorrichtungsbasis (52) angeordnet sind, dass insbesondere die Gelenkeinheiten (64, 66) mehrachsige Gelenkeinheiten sind.

11. Schlingerdämpfungsvorrichtung nach einem der voranstehenden Ansprüche, **dadurch gekennzeichnet, dass** die Dämpfereinheiten (72, 74) erste Längsdämpfungsglieder (76, 78) und zweite Längsdämpfungsglieder (82, 84) aufweisen, die relativ zueinander in einer Längsrichtung (86, 88) bewegungsgedämpft bewegbar sind, dass insbesondere die zweiten Längsdämpfungsglieder (82, 84) an den ersten Längsdämpfungsgliedern (76, 78) angreifen und gehemmt in Längsrichtung (86, 88) der ersten Längsdämpfungsglieder (76, 78) relativ zueinander verschiebbar sind, und dass insbesondere die zweiten Längsdämpfungsglieder (82, 84) mit Reibbelägen (96, 98) an den ersten Längsdämpfungsgliedern (76, 78) anliegen.

12. Schlingerdämpfungsvorrichtung nach einem der voranstehenden Ansprüche, **dadurch gekennzeichnet, dass** die ersten Längsdämpfungsglieder (76, 78) federelastisch biegbar und/oder tordierbar sind.

13. Schlingerdämpfungsvorrichtung nach Anspruch 11 oder 12, **dadurch gekennzeichnet, dass** eines der Längsdämpfungsglieder (76, 78) in das jeweils andere der Längsdämpfungsglieder (82, 84) eingreifend angeordnet ist und die beiden Längsdämpfungsglieder (76, 78, 82, 84) in Richtung ihrer Längsrichtung (86, 88) gehemmt relativ zueinander bewegbar sind, dass insbesondere die ersten Längsdämpfungsglieder (76, 78) in die zweiten Längsdämpfungsglieder (82, 84) eindringend angeordnet sind, dass insbesondere die zweiten Längsdämpfungsglieder (82, 84) die Bewegung der ersten Längsdämpfungsglieder (76, 78) relativ zu diesen pneumatisch und/oder hydraulisch hemmen.

## Claims

1. Sway damping device (50) for vehicle trailers (30) attachable to a trailer coupling (16) having a ball neck (24) and a coupling ball (28), comprising a device base (52) on the trailer coupling, said base comprising a mounting device (54) with a ball neck receptacle (180), wherein the ball neck receptacle (180) is designed such that a ball neck (24) accommodated and fixed in it is located in a longitudinal central plane (58) of the device base (52) on the trailer coupling and the device base (52) on the trailer coupling extends and stretches transversely to the longitudinal central plane (58), joint units (64, 66) fixed to the coupling and held on both sides of the longitudinal central plane (58) on the device base (52) on the trailer coupling, said units connecting the device base (52) on the trailer coupling to damper units (72, 74) arranged on both sides of the longitudinal central plane (58) and extending away from the device base (52) on the trailer coupling contrary to a forward driving direction, said device base being connected, for its part, to a traction coupling carrier (38) of the vehicle trailer (30) via a device base (92) on the trailer, wherein the device base (52) on the trailer coupling is provided with a mounting device (54) designed such that in a mounting position it is able to fix the ball neck (24) in a form-locking manner by way of interaction with positioning members (152, 154) thereof arranged on the ball neck (24) symmetrically to a longitudinal central plane (62) thereof, said positioning members extending away from the ball neck (24) transversely to the longitudinal central plane (62) thereof, in such a manner that the device base (52) is held stationarily on the ball neck (24) in a direction transverse to the central axis (56) of the coupling ball (28) and the ball attachment (26), wherein the mounting device (54) is transferrable from the mounting position into a dismounting position, the form-locking fixing of the mounting device (54) on the ball neck (24) being released in said dismounting position, and vice versa, and wherein the mounting device comprises two retaining members (182, 184), wherein the retaining members (182, 184) are held on the device base (52) on the trailer coupling,
**characterized in that** in the mounting position of the mounting device (54) the two retaining members (182, 184) engage in a form-locking manner on the positioning members (152, 154) with their retaining receptacles (186, 188), that the positioning members (152, 154) of the ball neck (24) engage in the retaining receptacles (186, 188) when the mounting device (54) is fixed on the ball neck (124) in a form-locking manner, that the retaining receptacles (186, 188) engage around the positioning members (152, 154) in such a manner that the retaining receptacles (186, 188) are secured on the positioning members (152, 154) against movement in a plane running parallel to the longitudinal central plane (58) of the device base (52) on the trailer coupling, and that the retaining members (182, 184) are movable relative to one another during transition from the mounting position into the dismounting position or vice versa.

2. Sway damping device as defined in claim 1, **characterized in that** the mounting device (54) is designed such that in the mounting position it is able to fix the ball neck (24) in a form-locking manner by way of interaction with at least one positioning member (152, 154) thereof in such a manner that the device base (52) on the trailer coupling is connected non-rotationally to the ball neck (24) relative to a central axis (56) of the coupling ball (28) and the ball attachment (26), and/or that, in particular, the mounting device (54) is designed such that in the mounting position it is able to fix the ball neck (24) in a form-locking manner by way of interaction with at least one positioning member (152, 154) thereof in such a manner that the device base (52) on the trailer coupling is held immovably on the ball neck (24) in the direction of gravity, and/or that, in particular, the mounting device (54) is designed such that in the mounting position it is able to fix the ball neck (24) in a form-locking manner by way of interaction with at least one positioning member (152, 154) thereof in such a manner that the device base (52) on the trailer coupling is held immovably on the ball neck (24) in a direction parallel to the central axis (56) of the coupling ball (28) and the ball attachment (26), and/or that, in particular, the mounting device (54) is designed such that in the mounting position it is able to fix the ball neck (24) in a form-locking manner such that a longitudinal central plane (58) of the device base (52) on the trailer coupling coincides with a longitudinal central plane (62) of the ball neck (24).

3. Sway damping device as defined in either one of the preceding claims, **characterized in that**, in particular, the mounting device (54) with the device base (52) on the trailer coupling is connected to the ball neck (24) so as to be non-rotatable about a central axis (56) of the coupling ball (28) and a ball attachment (26) due to the positioning members (152, 154) engaging in the retaining receptacles (186, 188), and/or that, in particular, the retaining receptacles (186, 188) have wall surfaces (192, 196, 194, 198) extending essentially parallel to a central axis (56) of the coupling ball (28) and the ball attachment (26) and accommodating the respective positioning members (152, 154) between them, and/or that, in particular, the retaining receptacles (186, 188) have wall surfaces (202, 204) extending transversely to the central axis (56) of the coupling ball (28) and the ball attachment (26) and acting on the respective positioning members (152, 154) in the direction of gravity, and/or that, in particular, the retaining receptacles (186, 188) engage on the positioning members (152, 154) in such a manner that the retaining receptacles (186, 188) are secured against movement in a plane running transversely to a direction of extension of the positioning members (152, 154).

4. Sway damping device as defined in claim 3, **characterized in that** the positioning members (152, 154) are arranged on a ball neck section (132) of the ball neck (24) adjacent to a ball attachment (26) of the ball neck (24) bearing the coupling ball (28) and, in particular, extending along the ball neck (24) proceeding from the ball attachment (26) over a distance corresponding at the most to one and a half times the diameter of the ball surface (146) of the coupling ball (28), that, in particular, the positioning members (152, 154) extend transversely to a course of the ball neck section (132) bearing these positioning members (152, 154) and away from it.

5. Sway damping device as defined in claim 3 or 4, **characterized in that** each of the positioning members (54) has at least one positioning surface (166, 168) and that the at least one positioning surface (166, 168) is arranged on an outer side of the respective positioning member (152, 154), and that, in particular, the respective positioning surface (166, 168) is at least partially located radially to the central axis (56) outside a projection contour (PK) of the coupling ball (28) resulting from projection of the coupling ball (28) onto the positioning member (152, 154), wherein, in particular, the projection contour (PK) intersects the positioning members (152, 154), and that, in particular, the positioning members (152, 154) each have positioning surfaces (166, 168) arranged on oppositely located sides.

6. Sway damping device as defined in claim 4 or 5, **characterized in that** each respective one of the positioning members (152, 154) is arranged on the ball neck section (132) on oppositely located sides of a longitudinal central plane (62) of the ball neck (24), and that the positioning members (152, 154) are designed to be in mirror symmetry in relation to the longitudinal central plane (62) of the ball neck (24).

7. Sway damping device as defined in any one of claims 4 to 6, **characterized in that** at least one additional positioning surface (172, 174, 176, 178) is arranged on the ball neck (24) and extends transversely to the first positioning surface (166, 168).

8. Sway damping device as defined in claim 7, **characterized in that** the at least one additional positioning surface (176, 178) is arranged on the ball neck section (132) of the ball neck (24) adjacent to a ball attachment (26) of the ball neck (24) bearing the coupling ball (28) and, in particular, said ball neck section bearing the positioning members (152, 154), and that, in particular, the at least one additional positioning surface (176, 178) is located radially to the central axis (56) within a projection contour (PK) of the coupling ball (28) resulting from projection of the coupling ball (28) onto the positioning members (152, 154), and/or that, in particular, the at least one additional positioning surface (172, 174) is arranged on the positioning members (152, 154) and that, in particular, the at least one additional positioning surface (172, 174) is located radially to the central axis (56) outside a projection contour (PK) of the coupling ball (28) resulting from projection of the coupling ball (28) onto the positioning member (152, 154) bearing it.

9. Sway damping device as defined in any one of the preceding claims, **characterized in that** one of the retaining members (184) is arranged so as to be stationary relative to the device base (52) on the trailer coupling and that the other one of the retaining members (186) is arranged so as to be movable relative to the device base (52) on the trailer coupling, that, in particular, the retaining member (182) movable relative to the device base (52) on the trailer coupling is guided in a guiding receptacle (212) of a guide unit (216), that, in particular, the retaining member (182) movable relative to the device base (52) on the trailer coupling is movable with an actuating device (232) between the mounting position and the dismounting position.

10. Sway damping device as defined in any one of the preceding claims, **characterized in that** the joint units (64, 66) fixed to the coupling are arranged symmetrically to the longitudinal central plane (58) of the device base (52) on the trailer coupling, that, in particular, the joint units (64, 66) are multiaxial joint units.

11. Sway damping device as defined in any one of the preceding claims, **characterized in that** the damper units (72, 74) have first longitudinal damping members (76, 78) and second longitudinal damping members (82, 84) movable relative to one another in a longitudinal direction (86, 88) in a manner damped in their movement, that, in particular, the second longitudinal damping members (82, 84) engage on the first longitudinal damping members (76, 78) and are displaceable relative to one another in an inhibited manner in longitudinal direction (86, 88) of the first longitudinal damping members (76, 78), and that, in particular, the second longitudinal damping members (82, 84) abut on the first longitudinal damping members (76, 78) with friction linings.

12. Sway damping device as defined in any one of the preceding claims, **characterized in that** the first longitudinal damping members (76, 78) are flexibly bendable and/or twistable.

13. Sway damping device as defined in claim 11 or 12, **characterized in that** one of the longitudinal damping members (76, 78) is arranged so as to engage in the respectively other one of the longitudinal damping members (82, 84) and the two longitudinal damping members (76, 78, 82, 84) are movable relative to one another in an inhibited manner in the direction of their longitudinal direction (86, 88), that, in particular, the first longitudinal damping members (76, 78) are arranged so as to penetrate the second longitudinal damping members (82, 84), that, in particular, the second longitudinal damping members (82, 84) inhibit the movement of the first longitudinal damping members (76, 78) relative to them pneumatically and/or hydraulically.

## Revendications

1. Dispositif d'amortissement d'oscillations (50) pour des remorques de véhicule (30) qui peuvent être accrochées à un attelage (16) présentant un col de boule (24) et une boule d'attelage (28), comprenant une base de dispositif (52) côté attelage qui comporte un dispositif de montage (54) avec un logement de col de boule (180), dans lequel le logement de col de boule (180) est réalisé de sorte qu'un col de boule (24) fixé et reçu dans celui-ci se trouve dans un plan médian longitudinal (58) de la base de dispositif (52) côté attelage et la base de dispositif (52) côté attelage s'étend et s'étire transversalement au plan médian longitudinal (58), des unités d'articulation (64, 66) fixées à l'attelage maintenues de part et d'autre du plan médian longitudinal (58) sur la base de dispositif (52) côté attelage qui relient des unités d'amortisseur (72, 74) agencées de part et d'autre du plan médian longitudinal (58) et s'étendant à l'opposé d'un sens de déplacement vers l'avant loin de la base de dispositif (52) côté attelage à la base de dispositif (52) côté attelage qui est reliée de son côté par une base de dispositif (92) côté remorque à un support d'attelage de traction (38) de la remorque de véhicule (30), dans lequel la base de dispositif (52) côté attelage est pourvue d'un dispositif de montage (54) qui est réalisé de sorte que celui-ci soit en mesure dans une position de montage de fixer à complémentarité de formes le col de boule (24) par coopération avec des corps de positionnement (152, 154) de celui-ci agencés au niveau du col de boule (24) de manière symétrique à un plan médian longitudinal (62) de celui-ci qui s'étendent transversalement au plan médian longitudinal (62) du col de boule (24) loin de celui-ci de telle manière que la base de dispositif (52) soit maintenue en direction transversale à l'axe médian (56) de la boule d'attelage (28) et de la saillie de boule (26) de manière immobile au niveau du col de boule (24), dans lequel le dispositif de montage (54) est transférable de la position de montage à une position de démontage, dans laquelle la fixation à complémentarité de formes du dispositif de montage (54) sur le col de boule (24) est détachée et inversement, et dans lequel le dispositif de montage comporte deux corps de retenue (182, 184), dans lequel les corps de retenue (182, 184) sont maintenus sur la base de dispositif (52) côté attelage, **caractérisé en ce que** les deux corps de retenue (182, 184) agissent à complémentarité de formes dans la position de montage du dispositif de montage (54) avec leurs logements de retenue (186, 188) sur les corps de positionnement (152, 154), que pour un dispositif de montage (54) fixé à complémentarité de formes sur le col de boule (24) les corps de positionnement (152, 154) du col de boule (24) viennent en prise dans les logements de retenue (186, 188), que les logements de retenue (186, 188) entourent les corps de positionnement (152, 154) de telle manière que les logements de retenue (186, 188) soient bloqués sur les corps de positionnement (152, 154) contre un mouvement dans un plan s'étendant parallèlement au plan médian longitudinal (58) de la base de dispositif (52) côté attelage, et que les corps de retenue (182, 184) sont mobiles lors du passage de la position de montage dans la position de démontage l'un par rapport à l'autre ou inversement.

2. Dispositif d'amortissement d'oscillations selon la revendication 1, **caractérisé en ce que** le dispositif de montage (54) est réalisé de sorte que celui-ci soit en mesure dans la position de montage de fixer à complémentarité de formes le col de boule (24) par coopération avec au moins un corps de positionnement (152, 154) de celui-ci de telle manière que la base de dispositif (52) côté attelage soit reliée sans pouvoir tourner par rapport à un axe médian (56) de la boule d'attelage (28) et de la saillie de boule (26) au col de boule (24), et/ou qu'en particulier le dispositif de montage (54) est réalisé de sorte que celui-ci soit en mesure dans la position de montage de fixer le col de boule (24) par coopération avec au moins un corps de positionnement (152, 154) de celui-ci à complémentarité de formes de telle manière que la base de dispositif (52) côté attelage soit maintenue dans le sens de gravité de manière immobile sur le col de boule (24), et/ou qu'en particulier le dispositif de montage (54) est réalisé de sorte que celui-ci soit en mesure dans la position de montage de fixer à complémentarité de formes le col de boule (24) par coopération avec au moins un corps de positionnement (152, 154) de celui-ci de telle manière que la base de dispositif (52) côté attelage soit maintenue en direction parallèle à l'axe médian (56) de la boule d'attelage (28) et de la saillie de boule (26) de manière immobile sur le col de boule (24), et/ou qu'en particulier le dispositif de montage (54) est réalisé de sorte que celui-ci soit en mesure dans la position de montage de fixer à complémentarité de formes le col de boule (24) de telle manière qu'un plan médian longitudinal (58) de la base de dispositif (52) côté attelage coïncide avec un plan médian longitudinal (62) du col de boule (24).

3. Dispositif d'amortissement d'oscillations selon l'une des revendications précédentes, **caractérisé en ce qu'**en particulier par la mise en prise des corps de positionnement (152, 154) dans les logements de retenue (186, 188) le dispositif de montage (54) est relié à la base de dispositif (52) côté attelage autour d'un axe médian (56) de la boule d'attelage (28) et d'une saillie de boule (26) sans pouvoir tourner au col de boule (24), et/ou qu'en particulier les logements de retenue (186, 188) présentent des surfaces de paroi (192, 196, 194, 198) qui s'étendent sensiblement parallèlement à un axe médian (56) de la boule d'attelage (28) et de la saillie de boule (26) et reçoivent entre elles les corps de positionnement (152, 154) respectifs, et/ou qu'en particulier les logements de retenue (186, 188) présentent des surfaces de paroi (202, 204) qui s'étendent transversalement à l'axe médian (56) de la boule d'attelage (28) et de la saillie de boule (26) et agissent sur les corps de positionnement (152, 154) respectifs dans le sens de gravité, et/ou qu'en particulier les logements de retenue (186, 188) agissent sur les corps de positionnement (152, 154) de telle manière que les logements de retenue (186, 188) soient bloqués contre un mouvement dans un plan s'étendant transversalement à un sens d'étendue des corps de positionnement (152, 154).

4. Dispositif d'amortissement d'oscillations selon la revendication 3, **caractérisé en ce que** les corps de positionnement (152, 154) sont agencés sur une section de col de boule (132) du col de boule (24) qui est contigüe à une saillie de boule (26) portant la boule d'attelage (28) du col de boule (24) et s'étend en particulier à partir de la saillie de boule (26) le long du col de boule (24) sur une distance qui correspond au maximum à une fois et demie le diamètre de la surface de boule (146) de la boule d'attelage (28), qu'en particulier les corps de positionnement (152, 154) s'étendent transversalement à une étendue de la section de col de boule (132) portant ces corps de positionnement (152, 154) et loin de celle-ci.

5. Dispositif d'amortissement d'oscillations selon la revendication 3 ou 4, **caractérisé en ce que** chacun des corps de positionnement (54) porte au moins une surface de positionnement (166, 168) et que l'au moins une surface de positionnement (166, 168) est agencée au niveau d'un côté extérieur du corps de positionnement respectif (152, 154), et qu'en particulier la surface de positionnement respective (166, 168) se trouve au moins partiellement radialement à l'axe médian (56) en dehors d'un contour de projection (PK) de la boule d'attelage (28), qui apparaît par projection de la boule d'attelage (28) sur les corps de positionnement (152, 154), dans lequel en particulier le contour de projection (PK) coupe les corps de positionnement (152, 154), et qu'en particulier les corps de positionnement (152, 154) présentent respectivement des surfaces de positionnement (166, 168) agencées sur des côtés opposés.

6. Dispositif d'amortissement d'oscillations selon la revendication 4 ou 5, **caractérisé en ce que** respectivement un des corps de positionnement (152, 154) est agencé au niveau de la section de col de boule (132) sur des côtés opposés d'un plan médian longitudinal (62) du col de boule (24), et que les corps de positionnement (152, 154) sont réalisés de manière symétrique au plan médian longitudinal (62) du col de boule (24).

7. Dispositif d'amortissement d'oscillations selon l'une des revendications 4 à 6, **caractérisé en ce qu'**au moins une autre surface de positionnement (172, 174, 176, 178) est agencée au niveau du col de boule (24), laquelle s'étend transversalement à la première surface de positionnement (166, 168).

8. Dispositif d'amortissement d'oscillations selon la revendication 7, **caractérisé en ce que** l'au moins une autre surface de positionnement (176, 178) est agencée au niveau de la section de col de boule (132) du col de boule (24), qui est contiguë à une saillie de boule (26) portant la boule d'attelage (28) du col de boule (24) et porte en particulier les corps de positionnement (152, 154), et qu'en particulier l'au moins une autre surface de positionnement (176, 178) se trouve radialement à l'axe médian (56) à l'intérieur d'un contour de projection (PK) de la boule d'attelage (28) qui apparaît par projection de la boule d'attelage (28) sur les corps de positionnement (152, 154), et/ou qu'en particulier l'au moins une autre surface de positionnement (172, 174) est agencée au niveau des corps de positionnement (152, 154) et qu'en particulier l'au moins une autre surface de positionnement (172, 174) se trouve radialement à l'axe médian (56) en dehors d'un contour de projection (PK) de la boule d'attelage (28) qui apparaît par projection de la boule d'attelage (28) sur le corps de positionnement (152, 154) la portant.

9. Dispositif d'amortissement d'oscillations selon l'une des revendications précédentes, **caractérisé en ce qu'**un des corps de retenue (184) est agencé fixement par rapport à la base de dispositif (52) côté attelage et que l'autre des corps de retenue (186) est agencé de manière mobile par rapport à la base de dispositif (52) côté attelage, qu'en particulier le corps de retenue (182) mobile par rapport à la base de dispositif (52) côté attelage est guidé dans un logement de guidage (212) d'une unité de guidage (216), qu'en particulier le corps de retenue (182) mobile par rapport à la base de dispositif (52) côté attelage est mobile avec un dispositif d'actionnement (232) entre la position de montage et la position de démontage.

10. Dispositif d'amortissement d'oscillations selon l'une des revendications précédentes, **caractérisé en ce que** les unités d'articulation (64, 66) fixées à l'attelage sont agencées de manière symétrique au plan médian longitudinal (58) de la base de dispositif (52) côté attelage, qu'en particulier les unités d'articulation (64, 66) sont des unités d'articulation à plusieurs axes.

11. Dispositif d'amortissement d'oscillations selon l'une des revendications précédentes, **caractérisé en ce que** les unités d'amortisseur (72, 74) présentent des premiers organes d'amortissement longitudinal (76, 78) et des seconds organes d'amortissement longitudinal (82, 84) qui sont mobiles de manière amortie en mouvement les uns par rapport aux autres dans un sens longitudinal (86 88), qu'en particulier les seconds organes d'amortissement longitudinal (82, 84) agissent sur les premiers organes d'amortissement longitudinal (76, 78) et sont mobiles en étant bloqués dans le sens longitudinal (86, 88) des premiers organes d'amortissement longitudinal (76, 78) les uns par rapport aux autres, et qu'en particulier les seconds organes d'amortissement longitudinal (82, 84) reposent avec des garnitures de friction (96, 98) contre les premiers organes d'amortissement longitudinal (76, 78).

12. Dispositif d'amortissement d'oscillations selon l'une des revendications précédentes, **caractérisé en ce que** les premiers organes d'amortissement longitudinal (76, 78) sont pliables et/ou peuvent être tordus de manière élastique comme un ressort.

13. Dispositif d'amortissement d'oscillations selon la revendication 11 ou 12, **caractérisé en ce qu'**un des organes d'amortissement longitudinal (76, 78) est agencé par mise en prise dans l'autre respectivement des organes d'amortissement longitudinal (82, 84) et les deux organes d'amortissement longitudinal (76, 78, 82, 84) sont mobiles en étant bloqués en direction de leur sens longitudinal (86, 88) l'un par rapport à l'autre, qu'en particulier les premiers organes d'amortissement longitudinal (76, 78) sont agencés par pénétration dans les seconds organes d'amortissement longitudinal (82, 84), qu'en particulier les seconds organes d'amortissement longitudinal (82, 84) bloquent pneumatiquement et/ou hydrauliquement le mouvement des premiers organes d'amortissement longitudinal (76, 78) par rapport à ceux-ci.
